# EUROPEAN PATENT SPECIFICATION

(11) **EP 3 689 575 B1**
(45) Date of publication and mention of the grant of the patent: **12.05.2021**
(21) Application number: 20153277.7
(22) Date of filing: 23.01.2020
(51) Int. Cl.: B29C 45/76

(54) **CONTROLLER OF INJECTION MOLDING MACHINE AND INJECTION MOLDING MACHINE**
STEUERGERÄT EINER SPRITZGIESSMASCHINE SOWIE SPRITZGIESSMASCHINE
ORGANE DE COMMANDE DE MACHINE DE MOULAGE PAR INJECTION ET MACHINE DE MOULAGE PAR INJECTION

(30) Priority: 31.01.2019 JP 2019016418
(43) Date of publication of application: 05.08.2020
(73) Proprietor: Sumitomo Heavy Industries, Ltd., Tokyo 141-6025 (JP)
(72) Inventor: KADOONO, Tomosuke, Chiba-shi, Chiba, 263-0001, (JP)
(74) Representative: Louis Pöhlau Lohrentz

(56) References cited:
- EP-A1- 1 717 655
- US-A- 5 470 218
- US-A1- 2004 186 607
- US-A1- 2006 247 821
- US-A1- 2011 106 284
- US-A1- 2011 160 895
- US-A1- 2012 231 103

## Description

### BACKGROUND OF THE INVENTION

### Field of the Invention

The present invention relates to a controller of an injection molding machine and an injection molding machine.

### Description of Related Art

It is necessary to adjust setting conditions in order to mold a good product by injection molding. The setting conditions are operation conditions or the like to be set for each process such as mold closing, injection, holding pressure, plasticizing, mold opening, and ejection by an injection molding machine. The setting conditions are also referred to as molding conditions since the setting conditions are conditions for operating the injection molding machine during molding. In the adjustment work of the setting conditions, for example, a trial shot is repeated while changing the setting conditions little by little until the good product is molded to find optimal setting conditions. Therefore, setting conditions saved in the past may be read and may be further adjusted therefrom. Japanese Patent No. 5654064 discloses a technique of displaying the setting conditions saved in the past on a screen of a display unit. In a case where the setting conditions are adjusted using this type of display unit, a setting history of the setting conditions saved in the past is displayed on the screen of the display unit, and an operator memorizes the setting conditions described therein, takes notes, or the like. Then, the operator inputs the setting conditions after returning to a screen for inputting the setting conditions . United States Patent Publication No. 2012/231103 discloses a system having an injection molding assembly mold including a stationary section and moveable section. United States Patent Publication No. 2011/106284 discloses a system for use in performance of injection molding operations. United States Patent Publication No. 2006/247821 discloses a control device of an injection molding machine which has a human-machine interface with a display unit. European Patent Publication No. 1 717 655 discloses a display controller for displaying molding condition setting data and monitoring data. United States Patent Publication No. 2004/186607 discloses a display device of an industrial machine that operates in accordance with an operating condition. United States Patent No. 5,470,218 discloses an injection blow molding apparatus including a plurality of process controllers, a plurality of monitors, a master processor, main menu means, display means, and alarm means. United States Patent Publication No. 2011/160895 discloses an injection molding controller for an injection molding apparatus and an assistant apparatus group comprising a plurality of peripheral devices.

[Patent Document 1] Japanese Patent No. 5654064
[Patent Document 2] United States Patent Publication No. 2012/231103
[Patent Document 3] United States Patent Publication No. 2011/106284
[Patent Document 4] United States Patent Publication No. 2006/247821
[Patent Document 5] European Patent Publication No. 1 717 655
[Patent Document 6] United States Patent Publication No. 2004/186607
[Patent Document 7] United States Patent No. 5,470,218
[Patent Document 8] United States Patent Publication No. 2011/160895

### SUMMARY OF THE INVENTION

However, in the related art disclosed in Japanese Patent No. 5654064, it is necessary for the operator to memorize the setting conditions described on the screen which displays the setting history and then to input the setting conditions after returning to the screen for inputting the setting condition. Therefore, a memory error or a typing error may occur, and there is a problem that it takes time and effort required to input design conditions.

In view of the above problems, the present invention reduces time and effort required to input design conditions.

A controller of an injection molding machine according to an aspect of the embodiment includes a condition button display processing section which displays a condition button for displaying setting conditions of the injection molding machine set in the past, on a display screen on which the setting conditions are displayed, in which the condition button display processing section displays a backward button for displaying the setting conditions set in the past in a backward direction in a time-series, on the display screen.

According to an aspect of the embodiment, it is possible to reduce the time and effort required to input the design conditions.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a diagram showing each component of an operation unit, a controller, and a display unit included in the injection molding machine according to the embodiment.
Fig. 4 is a diagram showing a first example of a screen to be displayed on the display unit included in the injection molding machine according to the embodiment.
Fig. 5 is a diagram showing an example of a pull-down menu to be displayed in a V/P switching mode selection field.
Fig. 6 is a diagram showing an example of a history list screen to be displayed when a history button is pressed.
Fig. 7 are diagrams for describing a scene in which setting conditions to be displayed on a first screen 21a are switched when a backward button 751 or a forward button 752 is pressed.
Fig. 8 is a flowchart of switching processing of the setting conditions.
Fig. 9 is a diagram showing a second example of the screen to be displayed on the display unit included in the injection molding machine according to the embodiment.
Fig. 10 is a diagram showing an example of a management item selection screen 70.
Fig. 11 is a diagram showing an example of a setting history of management items to be displayed when a history button is pressed.
Fig. 12 are diagrams for describing a scene in which the management items to be displayed on a fourth screen 21d are switched when the backward button 751 or the forward button 752 is pressed.
Fig. 13 is a flowchart of switching processing of the management items.
Fig. 14 is a diagram showing a third example of the screen to be displayed on the display unit included in the injection molding machine according to the embodiment.
Figs. 15A, 15B, 15C, and 15D are diagrams for describing a specific example of information to be selected using a waveform selection field 60, a waveform number selection field 63, and a waveform color selection field 64.
Fig. 16 is a diagram showing an example of a setting history of waveforms to be displayed when the history button is pressed.
Fig. 17 are diagrams for describing a scene in which waveforms to be displayed on a waveform display screen 80 are switched when the backward button 751 or the forward button 752 is pressed.
Fig. 18 is a flowchart of switching processing of the waveforms.

### DETAILED DESCRIPTION OF THE INVENTION

Hereinafter, an embodiment of the invention will be described with reference to drawings. In each drawing, the same or corresponding reference numerals are assigned to the same or corresponding configurations, and descriptions thereof are omitted.

### (Injection Molding Machine)

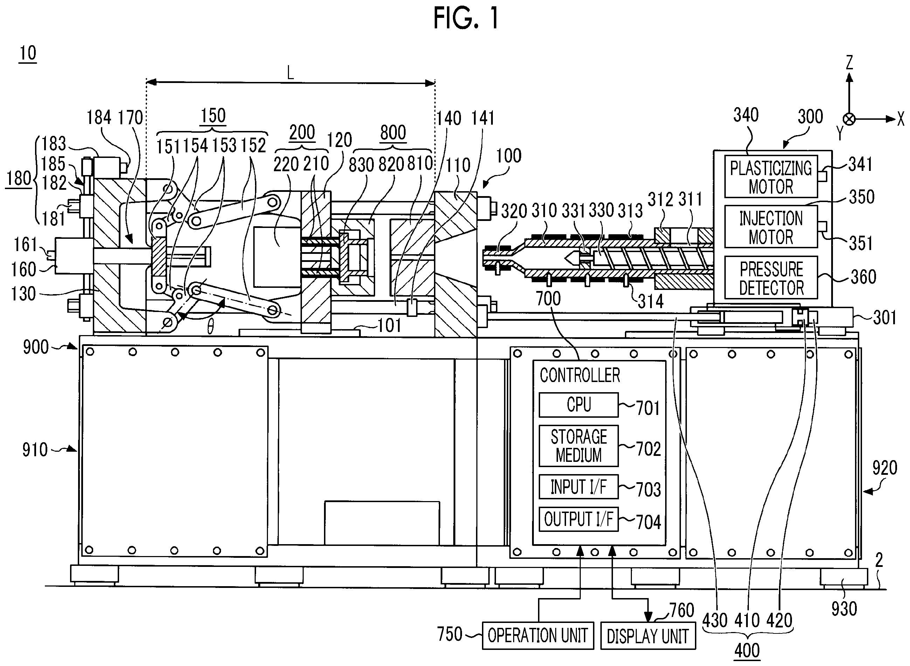

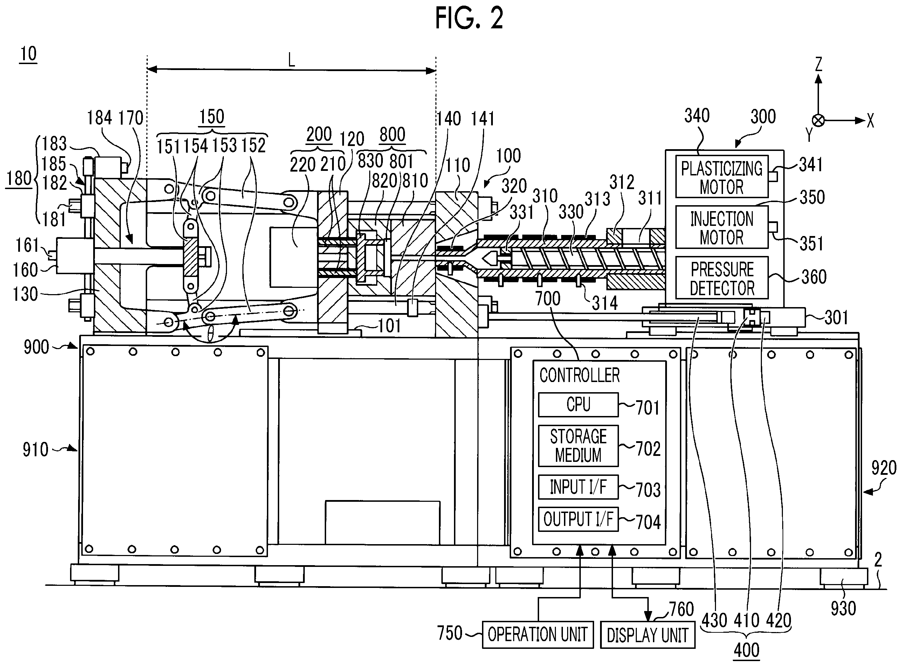

Fig. 1 is a view showing a state when a mold opening of an injection molding machine according to an embodiment is completed. Fig. 2 is a view showing a state when a mold of the injection molding machine according to the embodiment is clamped. In this specification, an X-axis direction, a Y-axis direction, and a Z-axis direction are directions perpendicular to each other. The X-axis direction and the Y-axis direction represent a horizontal direction, and the Z-axis direction represents a vertical direction. When a mold clamping unit 100 is a horizontal type, the X-axis direction is a mold opening and closing direction and the Y-axis direction is a width direction of an injection molding machine 10. A negative side in the Y-axis direction is referred to as an operation side, and a positive side in the Y-axis direction is referred to as a non-operation side.

As shown in Figs. 1 and 2, the injection molding machine 10 includes a mold clamping unit 100, an ejector unit 200, an injection unit 300, a movement unit 400, a controller 700, and a frame 900. The frame 900 includes a mold clamping unit frame 910 and an injection unit frame 920. The mold clamping unit frame 910 and the injection unit frame 920 are respectively installed on a floor 2 through a leveling adjuster 930. The controller 700 is disposed in the internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 at the time of mold closing is defined as a front side, and a movement direction (for example, X-axis negative direction) of the movable platen 120 at the time of mold opening is defined as a rear side.

The mold clamping unit 100 performs mold closing, pressurizing, mold clamping, depressurizing, and mold opening of a mold unit 800. The mold unit 800 includes a stationary mold 810 and a movable mold 820.

The mold clamping unit 100 is, for example, the horizontal type, and the mold opening and closing direction is the horizontal direction. The mold clamping unit 100 includes a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed so as to be movable in the mold opening and closing direction with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus the mold closing, pressurizing, mold clamping, depressurizing, and mold opening of the mold unit 800 are performed.

The toggle support 130 is disposed so as to be separated from the stationary platen 110 and is placed on the mold clamping unit frame 910 to be movable in mold opening and closing direction. In addition, the toggle support 130 may be disposed so as to be movable along a guide which is placed on the mold clamping unit frame 910. The guide of the toggle support 130 may be also used as the guide 101 of the movable platen 120.

In addition, the stationary platen 110 is fixed to the mold clamping unit frame 910, and the toggle support 130 is disposed so as to be movable in the mold opening and closing direction with respect to the mold clamping unit frame 910 in the present embodiment. However, the toggle support 130 may be fixed to the mold clamping unit frame 910, and stationary platen 110 may be disposed so as to be movable in the mold opening and closing direction with respect to the mold clamping unit frame 910.

The stationary platen 110 and the toggle support 130 are connected to each other with a gap L in the mold opening and closing direction by the tie bar 140. A plurality of (forexample, four) tie bars 140 may be used. The plurality of tie bars 140 are disposed in parallel in the mold opening and closing direction and extend according to a mold clamping force. A tie bar strain detector 141 which detects strain of the tie bar 140 maybe provided in at least one tie bar 140. The tie bar strain detector 141 sends a signal indicating a detection result to the controller 700. The detection result of the tie bar strain detector 141 is used for detection or the like of the mold clamping force.

In addition, the tie bar strain detector 141 is used as a mold clamping force detector which detects the mold clamping force in the present embodiment. However, the present invention is not limited thereto. The mold clamping force detector is not limited to a strain gauge type detector and may be a piezoelectric type detector, a capacitance type detector, a hydraulic type detector, an electromagnetic type detector, or the like. An attachment position of the mold clamping force detector is also not limited to the tie bar 140.

The toggle mechanism 150 is disposed between the movable platen 120 and the toggle support 130 and causes the movable platen 120 to move in the mold opening and closing direction with respect to the toggle support 130. The toggle mechanism 150 is configured of a crosshead 151, a pair of link groups, and the like. The pair of link groups includes respectively a first link 152 and a second link 153 which are bendably and stretchably connected to each other by pins or the like. The first link 152 is oscillatingly attached to the movable platen 120 by pins or the like. The second link 153 is oscillatingly attached to the toggle support 130 by pins or the like. The second link 153 is attached to the crosshead 151 through a third link 154. When the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, the number of nodes in each link group is five in Figs. 1 and 2, but may be four. One end portion of the third link 154 may be coupled to a node between the first link 152 and the second link 153.

The mold clamping motor 160 is attached to the toggle support 130 and operates the toggle mechanism 150. The mold clamping motor 160 causes the crosshead 151 to move forward or rearward with respect to the toggle support 130, and thus the first links 152 and the second links 153 are bent and stretched and the movable platen 120 moves forward or rearward with respect to the toggle support 130. The mold clamping motor 160 is directly connected to the motion conversion mechanism 170, but may be connected to the motion conversion mechanism 170 through a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed onto the screw shaft. A ball or a roller may be interposed between the screw shaft and the screw nut.

The mold clamping unit 100 performs a mold closing process, a pressurizing process, a mold clamping process, a depressurizing process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. A position or movement speed of the crosshead 151 is detected using, for example, a mold clamping motor encoder 161. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. Moreover, a movable platen position detector which detects the position of the movable platen 120 and a movable platen movement speed detector which detects the movement speed of the movable platen 120 are not limited to the mold clamping motor encoder 161, and a general detector can be used.

In the pressurizing process, the mold clamping motor 160 is further driven to further move the crosshead 151 forward from the mold closing completion position to a mold clamping position to generate the mold clamping force.

In the mold clamping process, the mold clamping motor 160 is driven to maintain the position of the crosshead 151 at the mold clamping position. In the mold clamping process, the mold clamping force generated in the pressurizing process is maintained. In the mold clamping process, a cavity space 801 (refer to Fig. 2) is formed between the movable mold 820 and the stationary mold 810, and the injection unit 300 fills the cavity space 801 with a liquid molding material. A filledmolding material is solidified, and thus a molding product can be obtained.

The number of cavity spaces 801 may be one or more. In the latter case, a plurality of molding products can be obtained simultaneously. An insert material may be disposed in a part of the cavity space 801 and the other part of the cavity space 801 may be filled with the molding material. A molding product in which the insert material and the molding material are integrated is obtained.

In the depressurization process, the mold clamping motor 160 is driven to move the crosshead 151 rearward from the mold clamping position to the mold opening start position. Accordingly, the movable platen 120 moves rearward and the mold clamping force is reduced. The mold opening start position may be the same as the mold closing completion position.

In the mold opening process, the mold clamping motor 160 is driven to move the crosshead 151 rearward from the mold opening start position to the mold opening completion position at the set movement speed. Accordingly, the movable platen 120 moves rearward and the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions. For example, movement speeds or positions (including mold closing start position, movement speed switching position, mold closing completion position, and mold clamping position) of the crosshead 151 and the mold clamping force in the mold closing process and the pressurizing process are collectively set as a series of setting conditions. The mold closing start position, the movement speed switching position, the mold closing completion position, and the mold clamping position are arranged in this order from the rear side to the front side and represent a start point and an end point of a section where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, movement speeds or positions (mold opening start position, movement speed switching position, and mold opening completion position) of the crosshead 151 in the depressurization process and the mold opening process are collectively set as a series of setting conditions . The mold opening start position, the movement speed switching position, and the mold opening completion position are arranged in this order from the front side to the rear side and represent a start point and an end point of a section where the movement speed is set. The movement speed is set for each section. The movement speed switching position may be one or more. The movement speed switching position may not be set. The mold opening start position may be the same as the mold closing completion position. Moreover, the mold opening completion position may be the same as the mold closing start position.

In addition, the movement speed, the position, or the like of the movable platen 120 may be set instead of the movement speed, the position, or the like of the crosshead 151. Moreover, the mold clamping force may be set instead of the position (for example, the mold clamping position) of the crosshead or the position of the movable platen.

Meanwhile, the driving force of the mold clamping motor 160 is amplified by the toggle mechanism 150 and transmitted to the movable platen 120. An amplification magnification of the toggle mechanism 150 is also referred to as a toggle magnification. The toggle magnification is changed according to an angle θ (hereinafter also referred to as "link angle θ") between the first link 152 and the second link 153. The link angle θ is obtained from the position of the crosshead 151. When the link angle θ is 180°, the toggle magnification becomes the maximum.

In a case where a space of the mold unit 800 is changed by replacement of the mold unit 800, a temperature change of the mold unit 800, or the like, a mold space adjustment is performed such that a predetermined mold clamping force is obtained when the mold is clamped. In the mold space adjustment, the gap L between the stationary platen 110 and the toggle support 130 is adjusted, for example, such that the link angle θ of the toggle mechanism 150 at the time of a mold touch where the movable mold 820 touches the stationary mold 810 becomes a predetermined angle .

The mold clamping unit 100 has the mold space adjustment mechanism 180. The mold space adjustment mechanism 180 adjusts the gap L between the stationary platen 110 and the toggle support 130 to perform the mold space adjustment. In addition, the mold space adjustment is performed, for example, between the end of a molding cycle to the start of a next molding cycle. The mold space adjustment mechanism 180 includes, for example, a screw shaft 181 which is formed on a rear end portion of the tie bar 140, a screw nut 182 which is held by the toggle support 130 so as to be rotatable and non-movable forward or rearward, and a mold space adjustment motor 183 which rotates the screw nut 182 screwed onto the screw shaft 181.

The screw shaft 181 and the screw nut 182 are provided for each tie bar 140. A rotation driving force of the mold space adjustment motor 183 may be transmitted to a plurality of screw nuts 182 through a rotation driving force transmission portion 185. The plurality of screw nuts 182 can be synchronously rotated with each other. In addition, it is possible to individually rotate the plurality of screw nuts 182 by changing a transmission path of the rotation driving force transmission portion 185.

The rotation driving force transmission portion 185 is configured of, for example, a gear. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation driving force transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 according to the present embodiment is the horizontal type in which the mold opening and closing direction is the horizontal direction, but may be a vertical type in which the mold opening and closing direction is the vertical direction.

In addition, the mold clamping unit 100 according to the present embodiment includes the mold clamping motor 160 as a drive source, but may include a hydraulic cylinder instead of the mold clamping motor 160. Moreover, the mold clamping unit 100 may have a linear motor for mold opening and closing and may have an electromagnet for mold clamping.

### (Ejector Unit)

Similarly to the descriptions of the mold clamping unit 100, in descriptions of the ejector unit 200, the movement direction (for example, the X-axis positive direction) of the movable platen 120 at the time of the mold closing is defined as the front side, and the movement direction (for example, the X-axis negative direction) of the movable platen 120 at the time of the mold opening is defined as the rear side.

The ejector unit 200 is attached to the movable platen 120 and moves forward or rearward together with the movable platen 120.
The ejector unit 200 includes an ejector rod 210 which ejects the molding product from the mold unit 800 and a drive mechanism 220 which moves the ejector rod 210 in the X-axis direction.

The ejector rod 210 is disposed in a through-hole of the movable platen 120 so as to be movable forward or rearward. A front end portion of the ejector rod 210 is in contact with a movable member 830 which is disposed inside the movable mold 820 so as to be movable forward or rearward. The front end portion of the ejector rod 210 may be connected to the movable member 830 or may not be connected to the movable member 830.

The drive mechanism 220 includes, for example, an ejector motor and a motion conversion mechanism which converts a rotary motion of the ejector motor into a linear motion of the ejector rod 210. The motion conversion mechanism includes a screw shaft and a screw nut which is screwed onto the screw shaft. A ball or a roller may be interposed between the screw shaft and the screw nut.

The ejector unit 200 performs an ejection process under the control of the controller 700. In the ejection process, the ejector rod 210 moves forward from a standby position to an ejection position at a set movement speed, and thus the movable member 830 moves forward and the molding product is ejected. Thereafter, the ejector motor is driven to move the ejector rod 210 rearward at a set movement speed, and thus the movable member 830 moves rearward to an original standby position.

The position or the movement speed of the ejector rod 210 is detected using, for example, an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, the X-axis negative direction) of a screw 330 during filling is defined as the front side, and a movement direction (for example, the X-axis positive direction) of the screw 330 during plasticizing is defined as the rear side.

The injection unit 300 is installed on a slide base 301, and the slide base 301 is disposed so as to be movable forward or rearward with respect to the injection unit frame 920. The injection unit 300 is disposed so as to be movable forward or rearward with respect to the mold unit 800. The injection unit 300 touches the mold unit 800 and fills the cavity space 801 inside the mold unit 800 with the molding material. The injection unit 300 includes, for example, a cylinder 310, a nozzle 320, the screw 330, a plasticizing motor 340, an injection motor 350, and a pressure detector 360.

The cylinder 310 heats the molding material which is supplied from a supply port 311 to the inner portion of the cylinder 310. The molding material includes, for example, a resin. The molding material is formed, for example, in a pallet shape and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (for example, the X-axis direction) of the cylinder 310. The heating unit 313 and the temperature detector 314 are provided in each of the plurality of zones . The controller 700 controls the heating unit 313 such that a set temperature is set in each of the plurality of zones and a detection temperature of the temperature detector 314 becomes the set temperature.

The nozzle 320 is provided on the front end portion of the cylinder 310 and is pressed against the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along spiral grooves of the screw 330. The molding material is gradually melted by heat from the cylinder 310 while being fed forward. As the liquid molding material is fed to the front side of the screw 330 and is accumulated in a front portion of the cylinder 310, the screw 330 moves rearward. Thereafter, when the screw 330 moves forward, the liquid molding material accumulated in the front side of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents a backflow of the molding material from the front side of the screw 330 toward the rear side when the screw 330 is pressed forward.

When the screw 330 moves forward, the backflow prevention ring 331 is pressed toward the rear side by the pressure of the molding material in the front side of the screw 330 and moves rearward relatively with respect to the screw 330 to a close position (refer to Fig. 2) at which a flow path of the molding material is closed. Accordingly, the molding material accumulated in the front side of the screw 330 is prevented from flowing toward the rear side.

On the other hand, when the screw 330 rotates, the backflow prevention ring 331 is pressed toward the front side by the pressure of the molding material to be fed forward along the spiral grooves of the screw 330 and moves forward relatively with respect to the screw 330 to an open position (refer to Fig. 1) at which the flow path of the molding material is open. Accordingly, the molding material is fed to the front side of the screw 330.

The backflow prevention ring 331 may be any one of a co-rotation type ring which rotates together with the screw 330 or a non-co-rotation type ring which does not rotate together with the screw 330. In addition, the injection unit 300 may include a drive source which causes the backflow prevention ring 331 to move forward or rearward with respect to the screw 330 between the open position and the close position.

The plasticizing motor 340 rotates the screw 330. A drive source which rotates the screw 330 is not limited to the plasticizing motor 340 and may be, for example, a hydraulic pump.

The injection motor 350 causes the screw 330 to move forward or rearward. A motion conversion mechanism or the like which converts a rotary motion of the injection motor 350 into a linear motion of the screw 330 is provided between the injection motor 350 and the screw 330. The motion conversion mechanism includes, for example, a screw shaft and a screw nut which is screwed onto the screw shaft. A ball, a roller, or the like may be provided between the screw shaft and the screw nut.
A drive source which causes the screw 330 to move forward or rearward is not limited to the injection motor 350 and may be, for example, a hydraulic cylinder.

The pressure detector 360 detects a force to be transmitted between the injection motor 350 and the screw 330. The detected force is converted into pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed, and thus the molding material is fed forward along the spiral grooves of the screw 330. According to this, the molding material is gradually melted. As the liquid molding material is fed to the front side of the screw 330 and is accumulated in a front portion of the cylinder 310, the screw 330 moves rearward. The rotating speed of the screw 330 is detected using, for example, a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven to add a set back pressure with respect to the screw 330. The back pressure with respect to the screw 330 is detected using, for example, the pressure detector 360. The pressure detector 360 sends a signal indicating a detection result to the controller 700. When the screw 330 moves rearward to a plasticizing completion position and a predetermined amount of the molding material is accumulated in the front side of the screw 330, the plasticizing process is completed.

The position and rotating speed of the screw 330 in the plasticizing process are collectively set as a series of setting conditions. For example, a plasticizing start position, a rotating speed switching position, and a plasticizing completion position are set. These positions are arranged in this order from the front side to the rear side and represent a start point and an end point of a section where the rotating speed is set. The rotating speed is set for each section. The rotating speed switching position may be one or more. The rotating speed switching position may not be set. Moreover, the back pressure is set for each section.

In the filling process, the injection motor 350 is driven to move the screw 330 forward at a set movement speed, and thus the cavity space 801 inside the mold unit 800 is filled with the liquid molding material accumulated in the front side of the screw 330. A position or movement speed of the screw 330 is detected using, for example, an injection motor encoder 351. The injection motor encoder 351 detects the rotation of the injection motor 350 and sends a signal indicating a detection result to the controller 700. When the position of the screw 330 reaches a set position, switching (so-called V/P switching) from the filling process to the holding pressure process is performed. A position at which the V/P switching is performed is also referred to as a V/P switching position. The set movement speed of the screw 330 may be changed according to the position of the screw 330, the time, or the like.

The position and movement speed of the screw 330 in the filling process are collectively set as a series of setting conditions. For example, a filling start position (also referred to as "injection start position"), a movement speed switching position, and a V/P switching position are set. These positions are arranged in this order from the rear side to the front side and represent a start point and an end point of a section where the movement speed is set. The movement speed is set for each section. The movement speed switching position may be one or more. The movement speed switching position may not be set.

The upper limit value of the pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 moves forward at a set movement speed. On the other hand, in a case where the detection value of the pressure detector 360 exceeds the set pressure, the screw 330 moves forward at a movement speed slower than the set movement speed such that the detection value of the pressure detector 360 is equal to or less than the set pressure for the purpose of mold protection.

In addition, in the filling process, the screw 330 may temporarily stop at the V/P switching position after the position of the screw 330 reaches the V/P switching position, and then the V/P switching may be performed. Immediately before the V/P switching, the screw 330 may move forward or rearward at a very slow speed instead of the stopping of the screw 330. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to press the screw 330 forward, and thus a pressure (hereinafter also referred to as a "holding pressure") of the molding material on a front end portion of the screw 330 is held at a set pressure and the molding material remaining inside the cylinder 310 is pressed toward the mold unit 800. Insufficient molding materials due to cooling shrinkage in the mold unit 800 can be replenished. The holding pressure is detected using, for example, the pressure detector 360. The pressure detector 360 sends a signal indicating a detection result to the controller 700. A set value of the holding pressure may be changed according to an elapsed time from the start of the holding pressure process or the like. A plurality of holding pressures and holding times for holding the holding pressure in the holding pressure process may be set, or the holding pressures and the holding time may be set collectively as a series of setting conditions.

In the holding pressure process, the molding material of the cavity space 801 in the mold unit 800 is gradually cooled, and an inlet of the cavity space 801 is closed by the solidified molding material when the holding pressure process is completed. This state is referred to as a gate seal, and the backflow of the molding material from the cavity space 801 is prevented. After the holding pressure process, a cooling process starts. In the cooling process, solidification of the molding material in the cavity space 801 is performed. The plasticizing process may be performed during the cooling process in order to shorten a molding cycle time.

In addition, the injection unit 300 according to the present embodiment is an inline screw type, but may be a preplasticizing type or the like. A preplasticizing type injection unit supplies the molding material melted inside a plasticizing cylinder to an injection cylinder and injects the molding material from the injection cylinder into the mold unit. In the plasticizing cylinder, a screw is disposed so as to be rotatable and non-movable forward or rearward, or a screw is disposed so as to be rotatable and movable forward or rearward. On the other hand, a plunger is disposed in the injection cylinder so as to be movable forward or rearward.

In addition, the injection unit 300 according to the present embodiment is the horizontal type in which the axial direction of the cylinder 310 is the horizontal direction, but may be the vertical type in which the axial direction of the cylinder 310 is the vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (for example, the X-axis negative direction) of the screw 330 during filling is defined as the front side, and the movement direction (for example, the X-axis positive direction) of the screw 330 during plasticizing is defined as the rear side.

The movement unit 400 causes the injection unit 300 to move forward or rearward with respect to the mold unit 800 . Moreover, the movement unit 400 presses the nozzle 320 with respect to the mold unit 800 to generate a nozzle touch pressure. The movement unit 400 includes a hydraulic pump 410, a motor 420 as a drive source, a hydraulic cylinder 430 as a hydraulic actuator, or the like. When the motor 420 is driven, the hydraulic pump 410 supplies a hydraulic pressure to the hydraulic cylinder 430, and the hydraulic cylinder 430 causes the injection unit 300 to move forward or rearward with the hydraulic pressure.

In addition, the movement unit 400 includes the hydraulic cylinder 430 in the present embodiment, but the present invention is not limited thereto. For example, an electric motor and a motion conversion mechanism which converts a rotary motion of the electric motor into a linear motion of the injection unit 300 may be used instead of the hydraulic cylinder 430.

### (Controller)

The controller 700 is configured of, for example, a computer and includes a central processing unit (CPU) 701, a storage medium 702 such as a memory, an input interface 703, and an output interface 704 as shown in Figs. 1 and 2. The controller 700 causes the CPU 701 to execute a program stored in the storage medium 702 to perform various controls. Moreover, the controller 700 receives a signal from the outside through the input interface 703 and transmits a signal to the outside through the output interface 704.

The controller 700 repeats the plasticizing process, the mold closing process, the pressurizing process, the mold clamping process, the filling process, the holding pressure process, the cooling process, the depressurizing process, the mold opening process, the ejection process, and the like to repeatedly manufacture the molding product. A series of operations to obtain the molding product, for example, an operation from the start of the plasticizing process to the start of the next plasticizing process is also referred to as a "shot" or a "molding cycle". Moreover, a time required for one shot is also referred to as a "molding cycle time" or "cycle time".

For example, one molding cycle includes the plasticizing process, the mold closing process, the pressurizing process, the mold clamping process, the filling process, the holding pressure process, the coolingprocess, the depressurizing process, the mold opening process, and the ejection process in this order. This order herein is an order of the start of each process. The filling process, the holding pressure process, and the cooling process are performed during the mold clamping process. The start of the mold clamping process may coincide with the start of the filling process . The end of the depressurizing process coincides with the start of the mold opening process.

In addition, a plurality of processes may be simultaneously performed in order to shorten the molding cycle time. For example, the plasticizing process may be performed during the cooling process of the previous molding cycle or may be performed during the mold clamping process. In this case, the mold closing process may be performed at the beginning of the molding cycle . Moreover, the filling process may be started during the mold closing process. Moreover, the ejection process may be started during the mold opening process. In a case where an on and off valve which opens and closes the flow path of the nozzle 320 is provided, the mold opening process may be started during the plasticizing process. This is because the molding material does not leak from the nozzle 320 as long as the on and off valve closes the flow path of the nozzle 320 even when the mold opening process starts during the plasticizing process.

In addition, the one molding cycle may include a process other than the plasticizing process, the mold closing process, the pressurizing process, the mold clamping process, the filling process, the holding pressure process, the cooling process, the depressurizing process, the mold opening process, and the ejection process.

For example, a pre-plasticizing suck-back process in which the screw 330 moves rearward to a plasticizing start position set in advance may be performed after the completion of the holding pressure process and before the start of the plasticizing process . It is possible to reduce the pressure of the molding material accumulated in the front side of the screw 330 before the start of the plasticizing process and thus to prevent the abrupt rearward movement of the screw 330 at the start of the plasticizing process .

Moreover, a post-plasticizing suck-back process in which the screw 330 moves rearward to a filling start position (also referred to as "injection start position") set in advance may be performed after the completion of the plasticizing process and before the start of the filling process. It is possible to reduce the pressure of the molding material accumulated in the front side of the screw 330 before the start of the filling process and thus to prevent the leakage of the molding material from the nozzle 320 before the start of the filling process.

The controller 700 is connected to an operation unit 750 or the display unit 760. The operation unit 750 receives an input operation by a user and outputs a signal in response to an input operation to the controller 700. The display unit 760 displays a display screen in response to the input operation in the operation unit 750 under the control of the controller 700.

The display screen is used for the setting of the injection molding machine 10 or the like. A plurality of display screens are provided and displayed by switching or overlapping each other . A user operates the operation unit 750 while viewing the display screen displayed on the display unit 760 to perform the setting (including an input of a set value) of the injection molding machine 10 or the like.

The operation unit 750 and the display unit 760 may be configured of, for example, a touch panel and integrated with each other. The operation unit 750 and the display unit 760 according to the present embodiment are integrated with each other, but may be provided independently. Moreover, a plurality of operation units 750 may be provided. The operation unit 750 and the display unit 760 are disposed on the negative side in the Y-axis direction of the mold clamping unit 100 (more specifically, the stationary platen 110). A negative side in the Y-axis direction is referred to as an operation side, and a positive side in the Y-axis direction is referred to as a non-operation side.

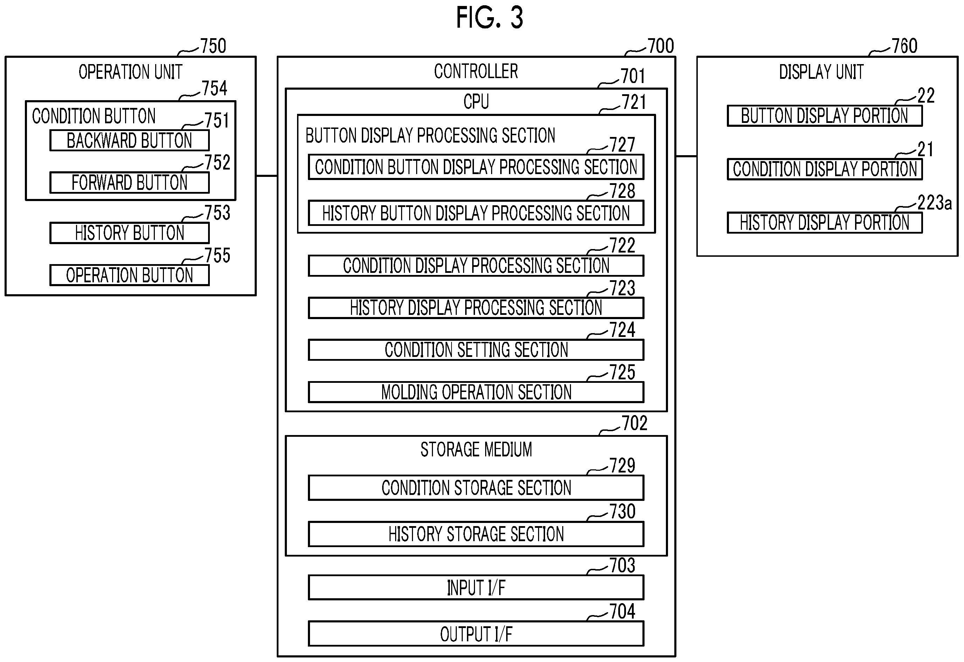

Fig 3 is a diagram showing each component of an operation unit, a controller, and a display unit included in the injection molding machine according to the embodiment.

As shown in Fig. 3, the operation unit 750 includes a condition button 754, a history button 753, and an operation button 755. The condition button 754 is a button for displaying the setting conditions set in the past and includes a backward button 751 and a forward button 752.

The backward button 751 is a button for displaying the setting conditions set in the past in a backward direction in a time-series . The backward button 751 is a button for displaying the setting conditions set in the past and is a button for displaying the setting conditions set in the past by going backward in a time-series. The backward button 751 is a button for displaying the setting conditions which go backward in a time-series with respect to current setting conditions. The backward button 751 is a button for displaying the setting conditions set in the backward direction to the past in a time-series. The backward button 751 is a button for causing a condition display portion 21 to display the setting conditions set in the past in the backward direction in a time-series.

The forward button 752 is a button for displaying the setting conditions set in the past in a forward direction in a time-series . The forward button 752 is a button for displaying the setting conditions set in the past and is a button for displaying the setting conditions set in the past by going forward in a time-series . The forward button 752 is a button for displaying the setting conditions which go forward in a time-series with respect to the current setting conditions. The forward button 752 is a button for displaying the setting conditions set in the forward direction in a time-series. Here, the forward direction is a direction opposite to the backward direction in a time-series.

The history button 753 is a button for displaying a list of the setting conditions set in the past as a setting history by arranging in a time-series order. A display example of a condition setting history to be displayed when the history button 753 is pressed will be described below. The backward button 751, the forward button 752, and the history button 753 are not limited to touch panel type display buttons and may be mechanical type buttons.

The operation button 755 is a mechanical button such as a mold opening button for the mold clamping unit 100 to execute a mold opening operation of the mold unit 800 or a mold closing button for the mold clamping unit 100 to execute a mold closing operation of the mold unit 800. The type of the operation button 755 is not limited thereto. The operation button 755 may be a touch panel type button or a mechanical type button.

As shown in Fig. 3, the display unit 760 includes a button display portion 22, the condition displayportion 21, andahistory display portion 223a. The button display portion 22 displays the condition button 754 such as the backward button 751 and the forward button 752 and the history button 753. The condition display portion 21 displays the setting conditions. The history display portion 223a displays a history of the conditions set in the past.

As shown in Fig. 3, the controller 700 includes the CPU 701, the storage medium 702 such as a memory, the input interface 703 which receives an external signal, and the output interface 704 which outputs an external signal.

The controller 700 includes a button display processing section721, a condition display processing section 722, a history display processing section 723, a condition setting section 724, and a molding operation section 725. The button display processing section 721, the condition display processing section 722, the history display processing section 723, the condition setting section 724, and the molding operation section 725 are functions realized by the CPU 701 executing a program stored in the storage medium 702. All or some of these functions may be executed on hardware by wired logic.

The button display processing section 721 performs processing for displaying the condition button 754 and the history button 753 on the button display portion 22 of the display unit 760. The button display processing section 721 includes a condition button display processing section 727 and a history button display processing section 728.

The condition button display processing section 727 displays the condition button 754 on the button display portion 22 of the display unit 760. The condition button display processing section 727 reads condition button image data stored in the storage medium 702, for example, and inputs the read condition button image data to the display unit 760 in order to display the backward button 751 and the forward button 752 on the button display portion 22. The condition button image data is data representing symbols corresponding to respective functions such as the backward button 751 and the forward button 752.

The history button display processing section 728 displays the history button 753 on the button display portion 22 of the display unit 760. The history button display processing section 728 reads history button image data stored in the storage medium 702, for example, and inputs the read history button image data to the display unit 760 in order to display the history button 753 on the button display portion 22. The history button image data is data representing a symbol corresponding to a function of the history button 753.

The condition display processing section 722 displays the setting conditions on the condition display portion 21 of the display unit 760. Moreover, the condition display processing section 722 displays the setting conditions set in the past on the condition display portion 21 of the display unit 760 based on the operation of the condition button 754 such as the backward button 751 and the forward button 752. The condition display processing section 722 reads setting condition data representing contents of the setting conditions stored in a condition storage section 729 based on a detection signal for detecting that the condition button 754 is pressed, and inputs the read setting condition data to the display unit 760. Accordingly, the setting conditions are displayed on the condition display portion 21 of the display unit 760. The setting conditions are, for example, operation conditions or the like to be set for each process such as mold closing, injection, holding pressure, plasticizing, mold opening, and ejection by the injection molding machine 10. A display example of the setting conditions on the condition display portion 21 will be described below.

The history display processing section 723 displays the setting conditions set in the past as the setting history on the history display portion 223a of the display unit 760. The history display processing section 723 causes the history display portion 223a of the display unit 760 to display the setting conditions set in the past based on the operation of the history button 753. The history display processing section 723 reads history data representing the history of the setting conditions stored in the history storage section 730 based on a detection signal for detecting that the history button 753 is pressed, and inputs the read history data to the display unit 760. Accordingly, the history of the setting conditions is displayed on the history display portion 223a of the display unit 760. A display example of the history of setting conditions on the history display portion 223a will be described below.

The condition setting section 724 sets the condition displayed on the condition display portion 21 as the setting condition. The condition setting section 724 sets a condition input to the condition display portion 21 as the setting condition based on an operation of a condition setting button (not shown) provided in the operation unit 750.

The molding operation section 725 causes the injection molding machine 10 to perform a molding operation under the setting conditions set by the condition setting section 724. The molding operation section 725 performs the molding operation under the setting conditions set by the condition setting section 724 based on an operation of the operation button 755.

The storage medium 702 includes a condition storage section 729 which stores the setting condition data and a history storage section 730 which stores the history data representing the contents of the history of the setting conditions.

The display unit 760 displays an image of the setting conditions on the condition display portion 21 of the display unit 760 based on the setting condition data input from the condition display processing section 722 of the controller 700. Moreover, the display unit 760 displays an image of the history of the setting conditions on the history display portion 223a of the display unit 760 based on the history data input from the history display processing section 723 of the controller 700.

The controller 700 according to the present embodiment is characterized in that the controller 700 includes the condition button display processing section 727 which displays the condition button 754 for displaying the setting conditions set in the past on the display screen 20 on which the setting conditions are displayed.

Moreover, the controller 700 according to the present embodiment is characterized in that the controller 700 includes the history button display processing section 728 which displays the history button 753 for displaying the history of the setting conditions set in the past on the display screen 20 on which the setting conditions are displayed.

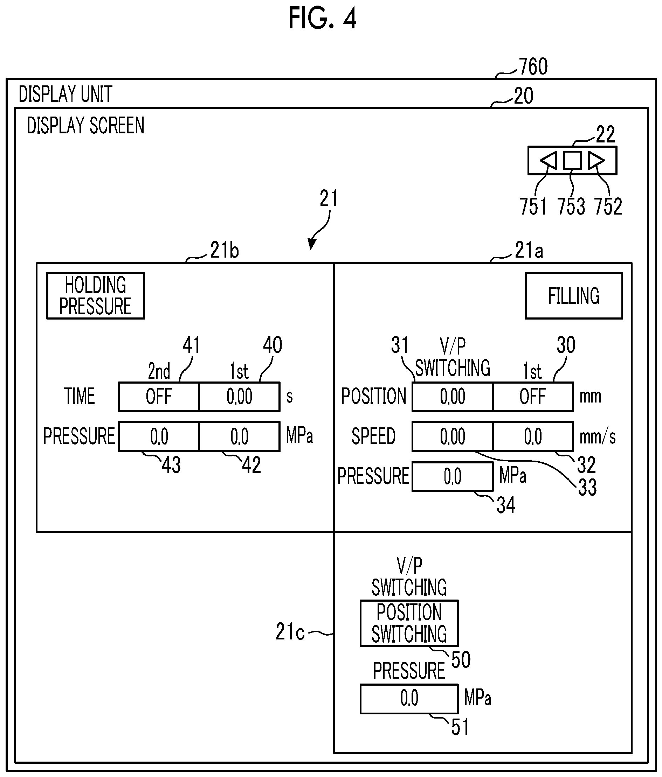

Next, a display example of the display screen 20 will be described with reference to Fig. 4. Fig. 4 is a diagram showing a first example of a screen to be displayed on the display unit included in the injection molding machine according to the embodiment. The condition display portion 21 and the button display portion 22 are displayed on the display screen 20 of the display unit 760.

### (Condition Display Portion 21 on Display Screen 20)

The condition display portion 21 on the display screen 20 displays a first screen 21a, a second screen 21b, and a third screen 21c for inputting the setting conditions of the injection molding machine 10. The setting conditions described in Figs. 4 to 8 correspond to the molding conditions for operating the injection molding machine 10 during molding.

### (First Screen 21a of Condition Display Portion 21)

The first screen 21a of the condition display portion 21 is provided with a plurality of input fields for inputting the setting conditions for the filling process. The filling process is a process of filling the molding material into the cavity space 801 in the mold unit 800 shown in Fig. 1. In the filling process, the injection motor 350 is driven to cause the screw 330 to move forward at a set speed, and thus the cavity space 801 in the mold unit 800 is filled with the liquid molding material accumulated in the front side of the screw 330. The position or speed of the screw 330 is detected using, for example, the injection motor encoder 351. The injection motor encoder 351 detects the rotation of the injection motor 350 and sends the signal indicating the detection result to the controller 700. When the position of the screw 330 reaches the set position, the V/P switching is performed. The V/P switching means switching from the filling process to the holding pressure process.

A numerical value indicating a position where the movement speed of the screw 330 is changed is input to an input field 30 of the first screen 21a. The position where the movement speed is changed is a desired position before the screw 330 whose operation is started reaches the V/P switching position. For example, a numeric keypad is displayed by touching the input field 30. Therefore, it is possible to input any value using the numeric keypad. In a case where there is no need to change the movement speed of the screw 330, a character "OFF" indicating that the movement speed is not changed is input to the input field30. In a case where the character "OFF" is input, for example, the character "OFF" to be pop-up displayed by touching the input field 30 may be selected.

A numerical value indicating the V/P switching position is input to an input field 31 of the first screen 21a. For example, a numeric keypad is displayed by touching the input field 31. Therefore, it is possible to input any value using the numeric keypad. When the screw 330 reaches the V/P switching position, the filling process by speed control is switched to the holding pressure process by pressure control.

A numerical value indicating a speed until the screw 330 whose operation is started reaches a position in the input field 30 is input to an input field 32 of the first screen 21a. For example, a numeric keypad is displayed by touching the input field 32. Therefore, it is possible to input any value using the numeric keypad.

A numerical value indicating a speed of the screw 330 from the position in the input field 30 to the position in the input field 31 (V/P switching position) is input to an input field 33 of the first screen 21a. For example, a numeric keypad is displayed by touching the input field 33. Therefore, it is possible to input any value using the numeric keypad.

In a case where "OFF" is input in the input field 30 of the first screen 21a, the speed in the input field 32 becomes invalid. Therefore, in this case, the screw 330 whose operation is started operates at the speed in the input field 33 until reaching the V/P switching position. Moreover, in a case where a position is input in the input field 30 of the first screen 21a, the speed in the input field 32 becomes valid. Therefore, in this case, the screw 330 operates at the speed in the input field 32 from starting the operation until reaching the position in the input field 30, and operates at the speed in the input field 33 from the position in the input field 30 to the position in the input field 31 (V/P switching position).

An upper limit value of a pressure detected by the pressure detector 360 is input to an input field 34 of the first screen 21a. In a case where the pressure detected by the pressure detector 360 exceeds a pressure in the input field 34, the controller 700 controls the speed of the screw 330 such that the pressure detected by the pressure detector 360 does not exceed the pressure in the input field 34 regardless of the speeds in the input fields 32, 33, or the like.

### (Second Screen 21b of Condition Display Portion 21)

The second screen 21b of the condition display portion 21 is a screen for inputting the setting conditions for the holding pressure process. The second screen 21b is provided with a plurality of input fields 40 to 43. In the holding pressure process, the injection motor 350 shown in Fig. 1 is driven to press the screw 330 forward, and thus the pressure (holding pressure) of the molding material on the front end portion of the screw 330 is held at the set pressure and the molding material remaining inside the cylinder 310 is pressed toward the mold unit 800. In the holding pressure process, the injection motor 350 is driven to press the screw 330 forward, and thus the pressure of the molding material on the front end portion of the screw 330 is held at the set pressure and the molding material remaining inside the cylinder 310 is pressed toward the mold unit 800. The insufficient molding materials due to the cooling shrinkage in the mold unit 800 can be replenished.

A numerical value indicating a time is input to the input field 40 of the second screen 21b. Specifically, a time for maintaining a pressure input in the input field 42 after the V/P switching is input to the input field 40. For example, a numeric keypad is displayed by touching the input field 40. Therefore, it is possible to input any value using the numeric keypad.

A numerical value indicating a time is input to the input field 41 of the second screen 21b. Specifically, the time for maintaining the pressure input in the input field 43 is input to the input field 41 after the time input in the input field 40 elapses. For example, a numeric keypad is displayed by touching the input field 41. Therefore, it is possible to input any value using the numeric keypad.

In a case where there is no need to change the pressure, that is, in a case where the pressure in the input field 42 is maintained for the time in the input field 40, the character "OFF" indicating that the pressure is not changed is input to the input field 41. In a case where the character "OFF" is input, for example, the character "OFF" to be pop-up displayed by touching the input field 41 may be selected.

### (Third Screen 21c of Condition Display Portion 21)

The third screen 21c of the condition display portion 21 is provided with a V/P switching mode selection field 50 and an input field 51.

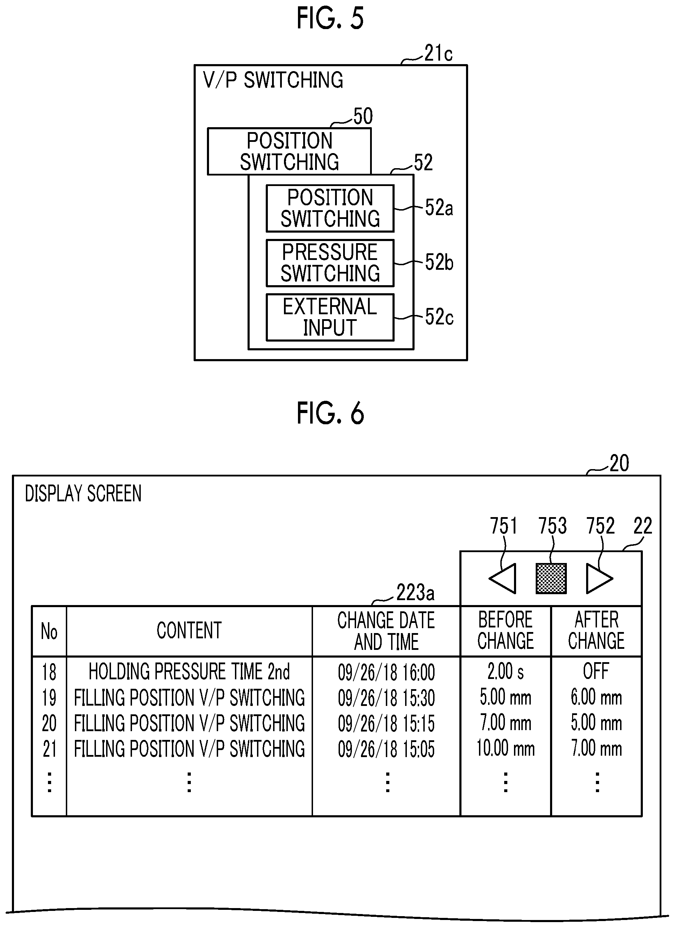

The V/P switching mode selection field 50 on the third screen 21c is a screen for selecting a mode for performing the V/P switching. A pull-down menu 52 shown in Fig. 5 is displayed by touching the V/P switching mode selection field 50. Fig. 5 is a diagram showing an example of a pull-down menu to be displayed in the V/P switching mode selection field. As shown in Fig. 5, the pull-down menu 52 includes a position switching button 52a for selecting a position switching mode, a pressure switching button 52b for selecting a pressure switching mode, and an external input button 52c for selecting an external input switching mode.

The position switching mode is a mode for performing the switching from the filling process by speed control to the holding pressure process by pressure control based on the detected position of the screw 330.

The pressure switching mode is a mode for performing the switching from the filling process by speed control to the holding pressure process by pressure control based on the detected pressure instead of the position of the screw 330.

The external input switching mode is a mode for performing the V/P switching based on a signal from a unit provided outside the injection molding machine 10.

Returning to Fig. 4, a numerical value indicating a pressure for the V/P switching is input to the input field 51 of the third screen 21c. For example, a numeric keypad is displayed by touching the input field 51. Therefore, it is possible to input any value using the numeric keypad. In a case where the detected pressure exceeds the pressure in the input field 51, the switching from the filling process to the holding pressure process is performed regardless of the numerical value input to the first screen 21a.

### (Button Display Portion 22 on Display Screen 20)

The button display portion 22 on the display screen 20 displays the backward button 751, the forward button 752, and the history button 753.

The backward button 751 is the button for causing the condition display portion 21 to display the setting conditions set in the past in the backward direction in a time-series.

The forward button 752 is the button for causing the condition display portion 21 to display the setting conditions set in the past in the forward direction in a time-series.

The history button 753 is the button for displaying a list of the setting conditions set in the past as the setting history by arranging in a time-series order. The display of the condition setting history to be displayed when the history button 753 is pressed will be described with reference to Fig. 6.

Fig. 6 is a diagram showing an example of a history display portion to be displayed when a history button is pressed. When the history button 753 is pressed, the history button 753 is switched, for example, from an outline in white background to an outline in black background, and a history display portion 223a is further displayed below the history button 753.

The history display portion 223a displays a list of the setting conditions set in the past in a time-series order. The history display portion 223a has items such as "No", "Content", "Change Date and Time", "Before Change", and "After Change".

A serial number indicating the order in which the setting conditions are set is displayed in the "No" item of the history display portion 223a. In Fig. 6, numbers in ascending order are assigned from the top to the bottom of the history display portion 223a. Adirection from the top to the bottom of the history display portion 223a is equal to the backward direction in a time-series. In the history display portion 223a, the old setting conditions are displayed in a time-series in the order of the numbers shown in the "No" item as "18", "19", "20", and "21".

The contents of the set setting conditions are shown in the "Content" item of the history display portion 223a. For example, in a case where the information in the input field 41 of the second screen 21b shown in Fig. 4 is set, "holding pressure time 2nd" is displayed in the "Content" item. Moreover, in a case where the information in the input field 31 of the first screen 21a shown in Fig. 4 is set, "filling position V/P switching" is displayed in the "Content" item.

A date and time when the setting conditions are changed is shown in the "Change Date and Time" item of the history display portion 223a.

A value of the setting condition before being set at the date and time shown in the "Change Date and Time" item is shown in the "Before Change" item of the history display portion 223a.

A value of the setting condition after being set at the date and time shown in the "Change Date and Time" item is shown in the "After Change" item of the history display portion 223a.

### (Switching Operation of Setting Conditions)

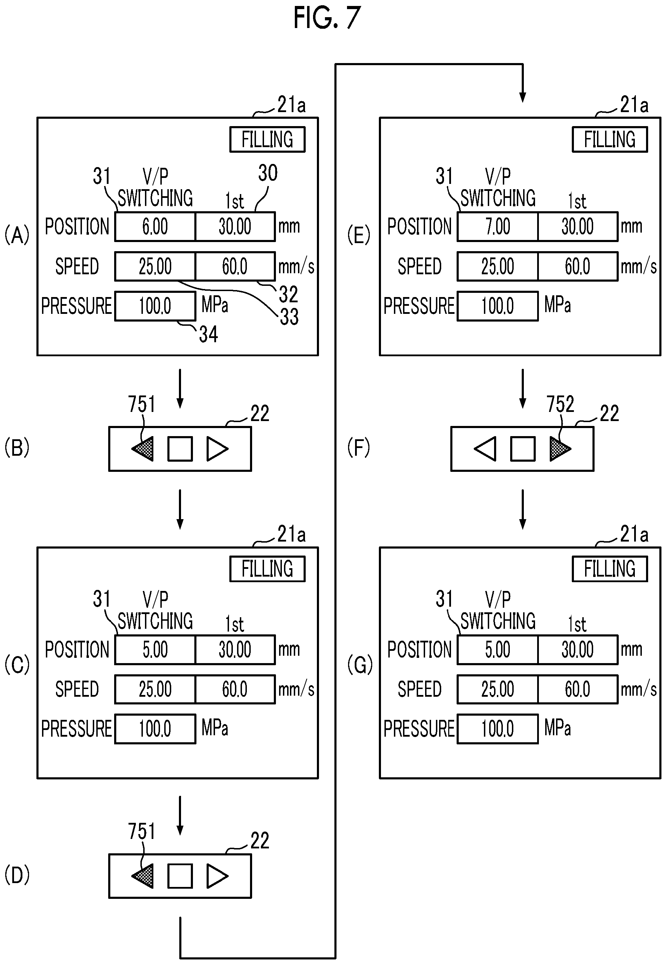

Next, an operation of switching the setting conditions to be displayed on the first screen 21a when the backward button 751 or the forward button 752 is pressed will be described with reference to Fig. 7. In the following, only a display example of the first screen 21a will be described. However, it is assumed that the display contents of the second screen 21b are switched when the backward button 751 or the forward button 752 is pressed similar to the first screen 21a.

Fig. 7 are diagrams for describing a scene in which setting conditions to be displayed on the first screen 21a are switched when the backward button 751 or the forward button 752 is pressed. (A) of Fig. 7 shows the setting conditions set at the change date and time corresponding to No. 19 shown in Fig. 7. (C) and (G) of Fig. 7 respectively show the setting conditions set at the change date and time corresponding to No. 20 shown in Fig. 7. (E) of Fig. 7 shows the setting conditions set at the change date and time corresponding to No. 21 shown in Fig. 7. (B) and (D) of Fig. 7 respectively show states where the backward button 751 is pressed. (F) of Fig. 7 shows a state where the forward button 752 is pressed.

For example, on the first screen 21a shown in (A) of Fig. 7, 30.00 mm is set in the input field 30, 6.00 mm is set in the input field 31, 60.0 mm/s is set in the input field 32, 25.00 mm/s is set in the input field 33, and 100 MPa is set in the input field 34.

In a case where the backward button 751 is pressed as shown in (B) of Fig. 7 when the first screen 21a shown in (A) of Fig. 7 is displayed, the display contents of the first screen 21a are switched to old setting conditions in a time-series. Therefore, the display of the first screen 21a is switched to the setting conditions shown in (C) of Fig. 7. As a result, the value in the input field 31 on the first screen 21a is changed to 5.00 mm as shown in (C) of Fig. 7.

In a case where the backward button 751 is pressed as shown in (D) of Fig. 7 when the first screen 21a shown in (C) of Fig. 7 is displayed, the display contents of the first screen 21a are switched to old setting conditions in a time-series. Therefore, the display on the first screen 21a is switched to the setting conditions shown in (E) of Fig. 7. As a result, the value in the input field 31 on the first screen 21a is changed to 7.00 mm as shown in (E) of Fig. 7.

In a case where the forward button 752 is pressed as shown in (F) of Fig. 7 when the first screen 21a shown in (E) of Fig. 7 is displayed, the display contents of the first screen 21a are switched to new setting conditions in a time-series. Therefore, the display of the first screen 21a is switched to the setting conditions shown in (G) of Fig. 7. As a result, the value in the input field 31 on the first screen 21a is changed to 5.00 mm as shown in (G) of Fig. 7.

Every time the condition button (backward button 751 or forward button 752) to be displayed on the button display portion 22 is pressed, the condition button display processing section 727 may perform display control in which the setting conditions on the first screen21a are switched or may per form display control, for example, in which the setting conditions before the backward button 751 is pressed once and the setting conditions after the backward button 751 is pressed once are displayed on the first screen 21a at the same time, as shown in Fig. 7.

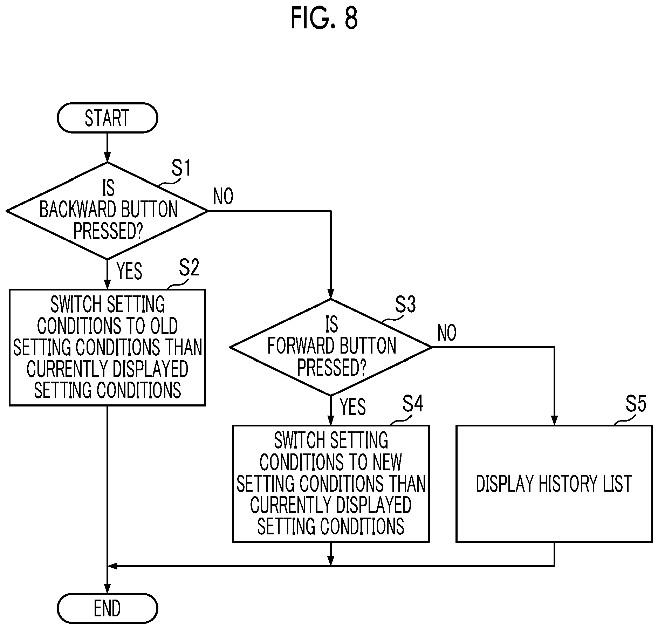

Fig. 8 is a flowchart of switching processing of the setting conditions. The controller 700 determines whether or not the backward button 751 is pressed in step S1. In a case where the backward button 751 is pressed (Yes in step S1), the controller 700 switches the setting conditions to old setting conditions in a time-series than currently displayed setting conditions (step S2). For example, in a case where the backward button 751 is pressed when the setting conditions shown in (C) of Fig. 7 are displayed, the setting conditions shown in (E) of Fig. 7 are switched.

In step S1, when a button other than the backward button 751 is pressed (No in step S1), the controller 700 determines that the forward button 752 or the history button 753 is pressed and executes processing of step S3.

In a case where the forward button 752 is pressed (Yes in step S3), the controller 700 switches the setting conditions to new setting conditions in a time-series than currently displayed setting condition (step S4). For example, in a case where the forward button 752 is pressed when the setting conditions shown in (E) of Fig. 7 is displayed, the setting conditions shown in (G) of Fig. 7 is switched.

In a case where a button other than the forward button 752 is pressed (No in Step S3), the controller 700 determines that the history button 753 is pressed and displays the history display portion 223a (Step S5).

As described above, with the controller 700 according to the present embodiment, when the molding conditions (setting conditions) for controlling the operation of the injection molding machine 10 is changed using the first screen 21a, the second screen 21b, the third screen 21c, and the like and then the same molding conditions set in the past are used again, the operator can switch molding conditions to be currently set to the molding conditions set in the past only by pressing the backward button 751 or the like without operating the first screen 21a, the second screen 21b, the third screen 21c, and the like. Therefore, with the controller 700 according to the present embodiment, it is possible to save time and effort to set the molding conditions again using the first screen 21a, the second screen 21b, the third screen 21c, and the like, and thus to shorten the work time for setting the molding conditions and suppress erroneous input.

In particular, in order to mold a good product by injection molding, it is necessary to gradually change the molding conditions until the good product is molded. In such a molding condition changing work, for example, the molding conditions may be returned to the molding conditions set in the past and the molding conditions may be further finely adjusted from the molding conditions set in the past. Therefore, it takes a long time to adjust the molding conditions. In the related art, in order to return to the molding conditions set in the past, it is necessary for the operator to check the setting history, memorize or the like the molding conditions described therein, and applies the molding conditions to the condition display portion 21. On the contrary, with the controller 700 according to the present embodiment, it is possible to immediately call and display the molding conditions set in the past only by pressing the backward button 751 or the like. Therefore, it is unnecessary for the operator to check the setting history, and thus the time for the fine adjustment of the molding conditions is also significantly shortened. Accordingly, it is possible to reduce a production cost of the molding product.

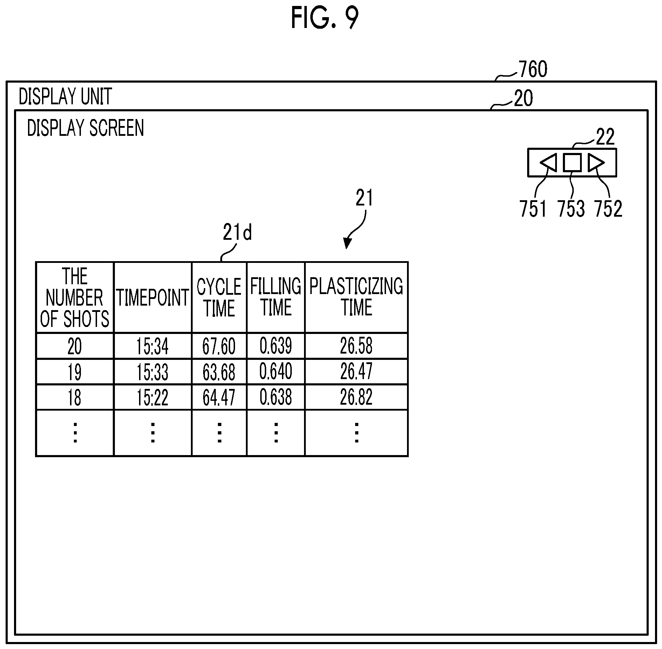

Fig. 9 is a diagram showing a second example of the screen to be displayed on the display unit included in the injection molding machine according to the embodiment. In the condition display portion 21 on the display screen 20 of Fig. 9, a fourth screen 21d is displayed instead of the first screen 21a to the third screen 21c.

The fourth screen 21d in Fig. 9 is a screen for displaying management items which are setting conditions for managing the quality of molding. Data used for the management of the molding operation of the injection molding machine 10 is displayed in the management item on the fourth screen 21d. The data is detected at specific intervals by various sensors included in the injection molding machine 10 and is displayed numerically in a time-series order in the management items on the fourth screen 21d.

An item representing the number of shots, an item representing a timepoint when the shot is performed, and a plurality of management items are displayed on the fourth screen 21d. The "shot" is a series of operations to obtain the molding product, for example, an operation from the start of the plasticizing process to the start of the next plasticizing process. The "management item" is an item for displaying the data used for the management of the molding operation of the injection molding machine 10. For example, a cycle time, a filling time, and a plasticizing time are displayed in the management items on the fourth screen 21d shown in Fig. 9.

The cycle time is a time required for one shot and is, for example, a time from the nth (n is a natural number of 1 or more) mold closing process to the (n+1)th mold closing process.

The filling time is a time for the filling process. The filling time is equal to a time from when the injection motor 350 drives the screw 330 to start moving forward at a set movement speed to when the screw 330 reaches the V/P switching position.

The plasticizing time is a time for the plasticizing process. The plasticizing time is equal to a time from when the plasticizing motor 340 drives the screw 330 to rotate at a set rotating speed and the molding material starts to be fed forward along the spiral grooves of the screw 330 to when the screw 330 moves backward, as the molding material is fed to the front side of the screw 330 and accumulated in the front portion of the cylinder 310, and a predetermined amount of molding material is accumulated in the front side of the screw 330.

A direction from the top to the bottom of the fourth screen 21d is equal to the backward direction in a time-series. On the fourth screen 21d, old data is displayed in a time-series in the order of the numbers representing the number of shots in the order of "20", "19", and "18".

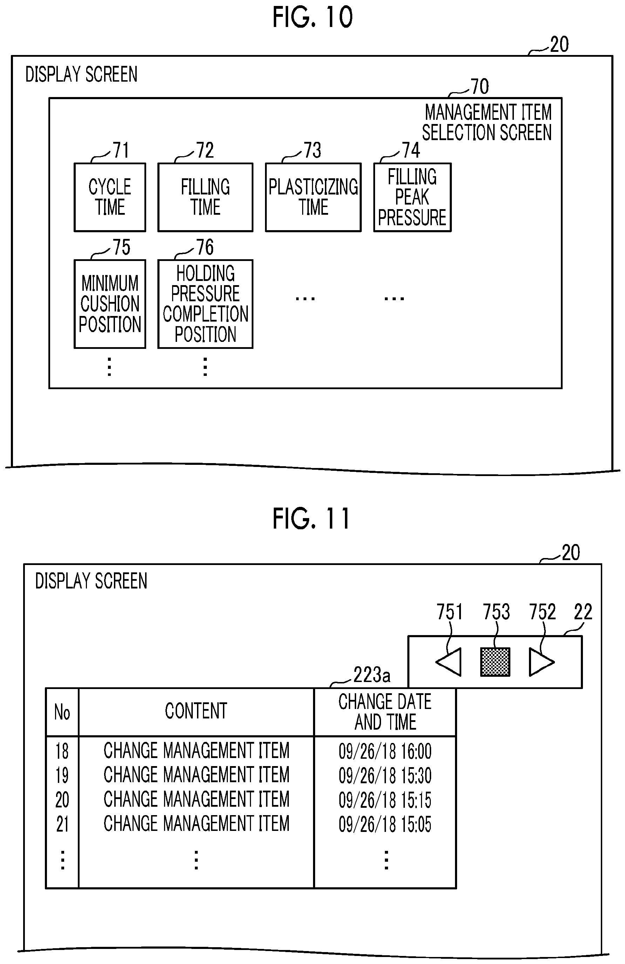

As shown in Fig. 9, it is necessary to select desired management items in advance in order to display the management items such as the cycle time, filling time, and plasticizing time on the fourth screen 21d. An example of management items selected by the operator will be described with reference to Fig. 10.

Fig. 10 is a diagram showing an example of a management item selection screen 70. The management item selection screen 70 is displayed on the display screen 20. On the management item selection screen 70, six management items 71 to 76 are displayed as an example of a management item group to be selected. Each of the six management items 71 to 76 is a button which can be touched. The number and type of management item groups are not limited thereto.

The management item 71 is a button for displaying the cycle time on the fourth screen 21d as the data used for the management of the molding operation of the injection molding machine 10.

The management item 72 is a button for displaying the filling time on the fourth screen 21d as the data used for the management of the molding operation of the injection molding machine 10.

The management item 73 is a button for displaying the plasticizing time on the fourth screen 21d as the data used for the management of the molding operation of the injection molding machine 10. The plasticizing time is the time for the plasticizing process.

The management item 74 is a button for displaying a filling peak pressure on the fourth screen 21d as the data used for the management of the molding operation of the injection molding machine 10. The filling peak pressure is a maximum pressure in the filling process.

The management item 75 is a button for displaying a minimum cushion position on the fourth screen 21d as the data used for the management of the molding operation of the injection molding machine 10. The minimum cushion position is the most forward position of the screw 330 in the injection process.

The management item 76 is a button for displaying a holding pressure completion position on the fourth screen 21d as the data used for the management of the molding operation of the injection molding machine 10. The holding pressure completion position is, for example, a position of the screw 330 when the time shown in the input field 40 or the input field 41 in Fig. 4 elapses in the holding pressure process.

For example, when the management items 71, 72, and 73 are pressed from the six management items 71 to 76 to be displayed on the management item selection screen 70, the management items 71, 72, and 73 are switched, for example, from an outline in white background to an outline in black background.

Thereafter, when a save button (not shown) to be displayed on the display screen 20 is pressed, the controller 700 stores the selected management items 71, 72, and 73 as the management item group to be displayed on the fourth screen 21d. In this case, the controller 700 stores a timepoint when the save button is pressed in association with the management item group.

In this manner, with the management item selection screen 70, it is possible for the operator to randomly change the management item group to be displayed on the fourth screen 21d.

The history button 753 may be pressed in order to display a list of management item groups set at different timepoints in a time-series order. A display example of the list of the management item groups to be displayed when the history button 753 is pressed will be described with reference to Fig. 11.

Fig. 11 is a diagram showing an example of a setting history of management items to be displayed when a history button is pressed. When the history button 753 is pressed, the history button 753 is switched, for example, from the outline in white background to the outline in black background, and a history display portion 223b is further displayed below the history button 753.

A serial number indicating the order in which the management items are set is displayed in the "No" item of the history display portion 223b. In Fig. 11, numbers in ascending order are assigned from the top to the bottom of the history display portion 223b. A direction from the top to the bottom of the history display portion 223b is equal to the backward direction in a time-series. In the history display portion 223b, the old setting conditions (management items) are displayed in a time-series in the order of the numbers shown in the "No" item as "18", "19", "20", and "21".

The contents of the set management items are shown in the "Content" item of the history display portion 223b. The notation of the contents of the management items is only necessary to know that the type of management items, the number of management items, and the like are set. For example, initial characters of the selected management items may be arranged and displayed.

A date and time when the management items are changed is shown in the "Change Date and Time" item of the history display portion 223b.

### (Switching Operation of Management Items)

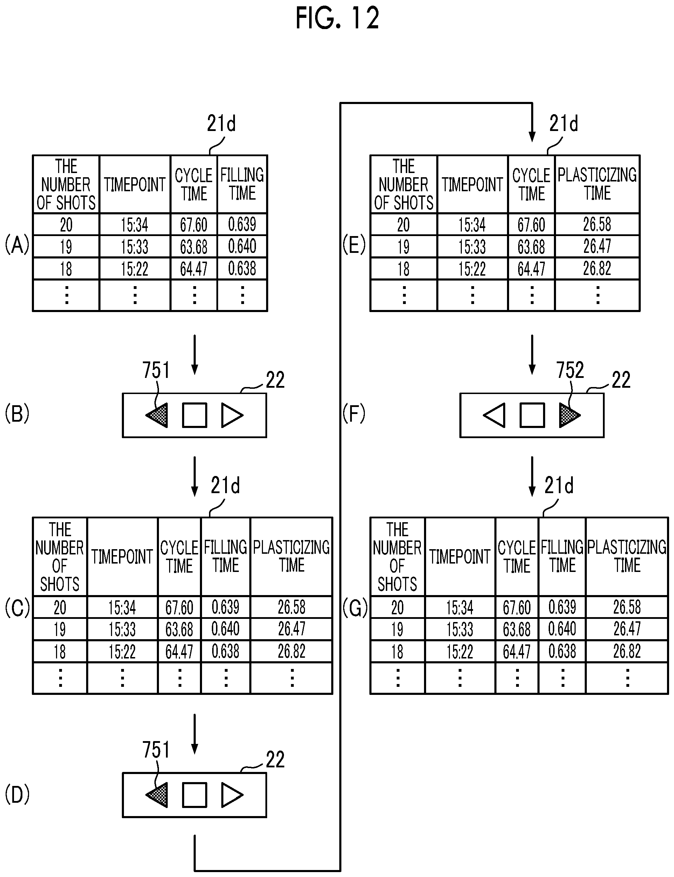

Next, an operation of switching the management items to be displayed on the fourth screen 21d when the backward button 751 or the forward button 752 is pressed will be described with reference to Fig. 12.

Fig. 12 are diagrams for describing a scene in which the management items to be displayed on the fourth screen 21d are switched when the backward button 751 or the forward button 752 is pressed. On the fourth screen 21d in (A) of Fig. 12, the cycle time and the filling time are displayed as the management items. In (C) and (G) of Fig. 12, the cycle time, the filling time, and the plasticizing time are respectively displayed as the management items. In (E) of Fig. 12, the cycle time and the plasticizing time are displayed as the management items. (B) and (D) of Fig. 12 respectively show states in which the backward button 751 is pressed. (F) of Fig. 12 shows a state where the forward button 752 is pressed.

In a case where the backward button 751 is pressed as shown in (B) of Fig. 12 when the fourth screen 21d shown in (A) of Fig. 12 is displayed, the display contents of the fourth screen 21d are switched to old management items in a time-series. Therefore, the display of the fourth screen 21d is switched to the management item shown in (C) of Fig. 12.

In a case where the backward button 751 is pressed as shown in (D) of Fig. 12 when the fourth screen 21d shown in (C) of Fig. 12 is displayed, the display contents of the fourth screen 21d are switched to old management items in a time-series. Therefore, the display of the fourth screen 21d is switched to the management items shown in (E) of Fig. 12.

In a case where the forward button 752 is pressed as shown in (F) of Fig. 12 when the fourth screen 21d shown in (E) of Fig. 12 is displayed, the display contents of the fourth screen 21d are switched to new management items in a time-series. Therefore, the display of the fourth screen 21d is switched to the management items shown in (G) of Fig. 12.

Every time the condition button (backward button 751 or forward button 752) to be displayed on the button display portion 22 is pressed, the condition button display processing section 727 may perform display control in which the setting conditions (management items) on the fourth screen 21d are switched or may perform display control, for example, in which the setting conditions (management items) before the backward button 751 is pressed once and the setting conditions (management items) after the backward button 751 is pressed once are displayed on the fourth screen 21d at the same time, as shown in Fig. 12.

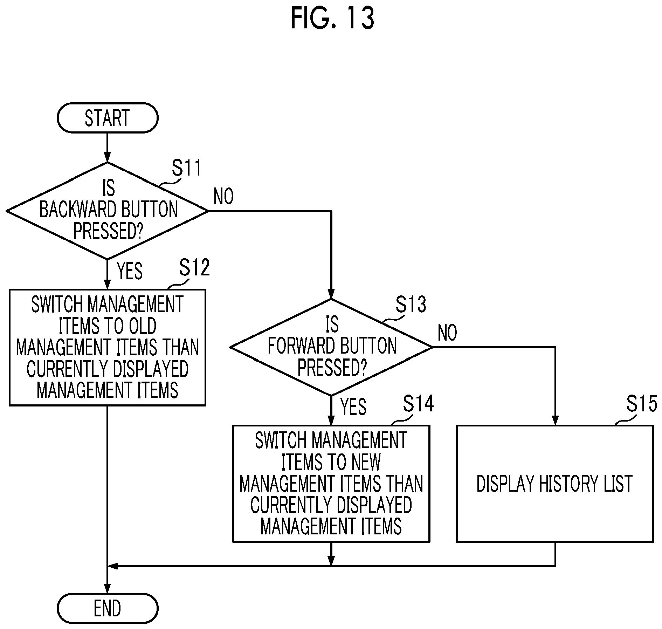

Fig. 13 is a flowchart of switching processing of the management items. The controller 700 determines whether or not the backward button 751 is pressed in step S11. In a case where the backward button 751 ispressed (Yes in step S11), the controller 700 switches the management items to old management items in a time-series than currently displayed management items (step S12). For example, in a case where the backward button 751 is pressed when the management item shown in (C) of Fig. 12 is displayed, the management items are switched to the management item shown in (E) of Fig. 12.

In step S11, in a case where a button other than the backward button 751 is pressed (No in step S11), the controller 700 determines that the forward button 752 or the history button 753 is pressed and executes processing of step S13.

In a case where the forward button 752 is pressed (Yes in step S13), the controller 700 switches the management items to new management items in a time-series than currently displayed management items (step S14). For example, in a case where the forward button 752 is pressed when the management item shown in (E) of Fig. 12 is displayed, the management items are switched to the management items shown in (G) of Fig. 12.

In a case where a button other than the forward button 752 is pressed (No in Step S13), the controller 700 determines that the history button 753 is pressed and displays the history display portion 223b (Step S15).

As described above, with the controller 700 according to the present embodiment, when the type and number of management items are changed using the management item selection screen 70 and then the same management items set in the past are used again, the operator can display the same management items set in the past only by pressing the backward button 751 without changing the type or number of management items using the management item selection screen 70. Therefore, with the controller 700 according to the present embodiment, it is possible to save time and effort to change the type and number of management items again using the management item selection screen 70, and thus to shorten the work time accompanying the change in the type and number of management items and suppress erroneous input.

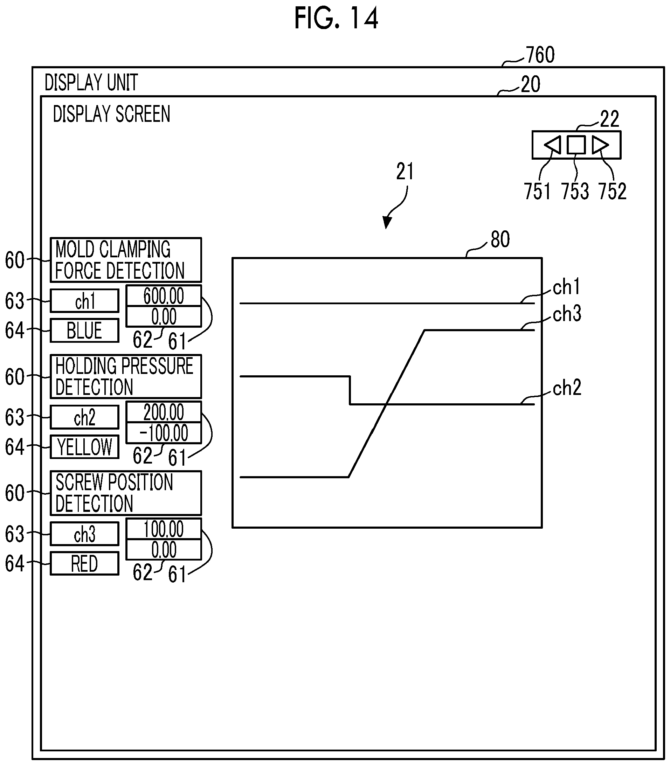

Fig. 14 is a diagram showing a third example of the screen to be displayed on the display unit included in the injection molding machine according to the embodiment. In the condition display portion 21 on the display screen 20 of Fig. 14, a waveform display screen 80, a waveform selection field 60, a vertical axis upper limit value input field 61, a vertical axis lower limit value input field 62, a waveform number selection field 63, and a waveform color selection field 64 are displayed instead of the first screen 21a to the fourth screen 21d.

The waveform display screen 80 in Fig. 14 is a screen for displaying management items (waveforms) which are the setting conditions for managing the quality of molding. The waveforms are data used for the management of the molding operation of the injection molding machine 10.
The data is detected discretely or continuously by various sensors included in the injection molding machine 10 and is displayed on the waveform display screen 80 as continuous waveforms in a time-series.

A waveform selected in the waveform selection field 60 is displayed on the waveform display screen 80. The waveform display screen 80 shows, for example, "mold clamping force detection" representing the detection result of the tie bar strain detector 141 that detects the strain of the tie bar 140 as a continuous waveform in a time-series, "holding pressure detection" representing the detection result of the pressure detector 360 in the holding pressure process as a continuous waveform in a time-series, and "screw position detection" representing the detection result of the injection motor encoder 351 that detects the screw position as a continuous waveform in a time-series.

The waveform selection field 60 is a screen for selecting a predetermined waveform from a plurality of waveforms in the case where the detection results detected by the various sensors included in the injection molding machine 10 are displayed as the continuous waveforms in a time-series.

The vertical axis upper limit value input field 61 is a screen for setting an upper limit value of the vertical axis of the waveform display screen 80. For example, a numeric keypad is displayed by touching the vertical axis upper limit value input field 61. Therefore, it is possible to input any value using the numeric keypad.

The vertical axis lower limit value input field 62 is a screen for setting a lower limit value of the vertical axis of the waveform display screen 80. For example, a numeric keypad is displayed by touching the vertical axis lower limit value input field 62. Therefore, it is possible to input any value using the numeric keypad.

The waveform number selection field 63 is a screen for selecting a number (ch1, ch2, ch3, or the like) to be assigned to the selected waveform in order to specify the type of waveform selected in the waveform selection field 60.

The waveform color selection field 64 is a screen for selecting a color (blue, yellow, red, or the like) to be assigned to the selected waveform in order to specify the type of waveform selected in the waveform selection field 60.

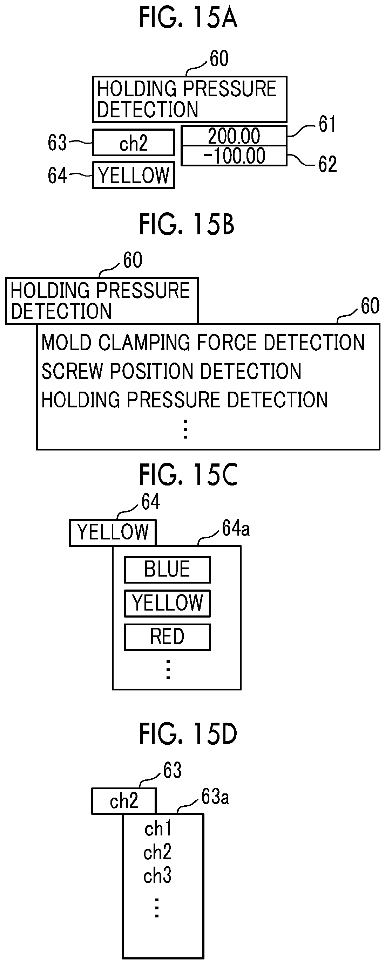

Figs. 15A, 15B, 15C, and 15D are diagrams for describing a specific example of information to be selected using the waveform selection field 60, the waveform number selection field 63, and the waveform color selection field 64. A pull-downmenu 60a shown in Fig. 15B is displayed by touching the waveform selection field 60 shown in Fig. 15A.

The pull-down menu 60a includes, for example, the item "mold clamping force detection" for representing the detection result of the tie bar strain detector 141 that detects the strain of the tie bar 140 as a continuous waveform in a time-series, the item "holding pressure detection" for representing the detection result of the pressure detector 360 in the holding pressure process as a continuous waveform in a time-series, and the item "screw position detection" for representing the detection result of the injection motor encoder 351 that detects the screw position as a continuous waveform in a time-series. Items selected from these items are displayed in the waveform selection field 60.

A pull-down menu 64a shown in Fig. 15C is displayed by touching the waveform color selection field 64 shown in Fig. 15A.

The pull-down menu 64a includes items ("blue", "yellow", "red", and the like) representing a color to be assigned to the waveform selected in the waveform selection field 60. The color of the item selected from these items is assigned to the waveform selected in the waveform selection field 60.

A pull-down menu 63a shown in Fig. 15D is displayed by touching the waveform number selection field 63 shown in Fig. 15A. The pull-down menu 63a includes items ("ch 1", "ch 2", "ch 3", and the like) representing a number assigned to the waveforms selected in the waveform selection field 60. The number of the item selected from these items is assigned to the waveform selected in the waveform selection field 60.

When the waveform type, the waveform color, the waveform number, and the like are set in this manner and then the save button (not shown) to be displayed on the display screen 20 is pressed, the controller 700 stores the set waveform type, waveform color, and waveform number as a waveform group to be displayed on the waveform display screen 80. In this case, the controller 700 stores a timepoint when the save button is pressed in association with the waveform group.

In this manner, it is possible for the operator to randomly change the waveform group to be displayed on the waveform display screen 80 by using the waveform selection field 60, the vertical axis upper limit value input field 61, the vertical axis lower limit value input field 62, the waveform number selection field 63, the waveform color selection field 64, and the like.

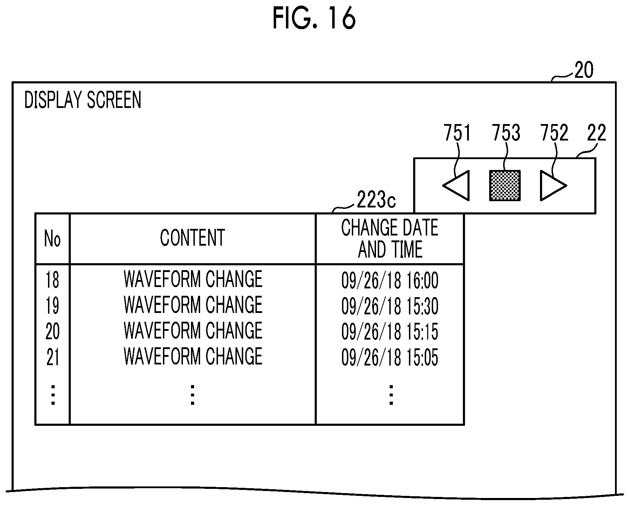

The history button 753 may be pressed in order to display a list of waveform groups set at different timepoints in a time-series order. A display example of the list of the waveform groups when the history button 753 is pressed will be described with reference to Fig. 16.

Fig. 16 is a diagram showing an example of a setting history of waveforms to be displayed when the history button is pressed. When the history button 753 is pressed, the history button 753 is switched, for example, from the outline in white background to the outline in black background, and a history display portion 223c is further displayed below the history button 753.

A serial number indicating the order in which the management items are set is displayed in the "No" item of the history display portion 223c. In Fig. 16, numbers in ascending order are assigned from the top to the bottom of the history display portion 223c. A direction from the top to the bottom of the history display portion 223c is equal to the backward direction in a time-series. In the history display portion 223c, the old setting conditions (waveforms) are displayed in a time-series in the order of the numbers shown in the "No" item as "18", "19", "20", and "21".

The contents of the set waveforms are shown in the "Content" item of the history display portion 223c. The notation of the contents of the management items is only necessary to know that the type of management items, the number of management items, and the like are set. For example, initial characters of the selected waveforms may be arranged and displayed.

A date and time when the management items are changed is shown in the "Change Date and Time" item of the history display portion 223c.

### (Switching Operation of Management Items)

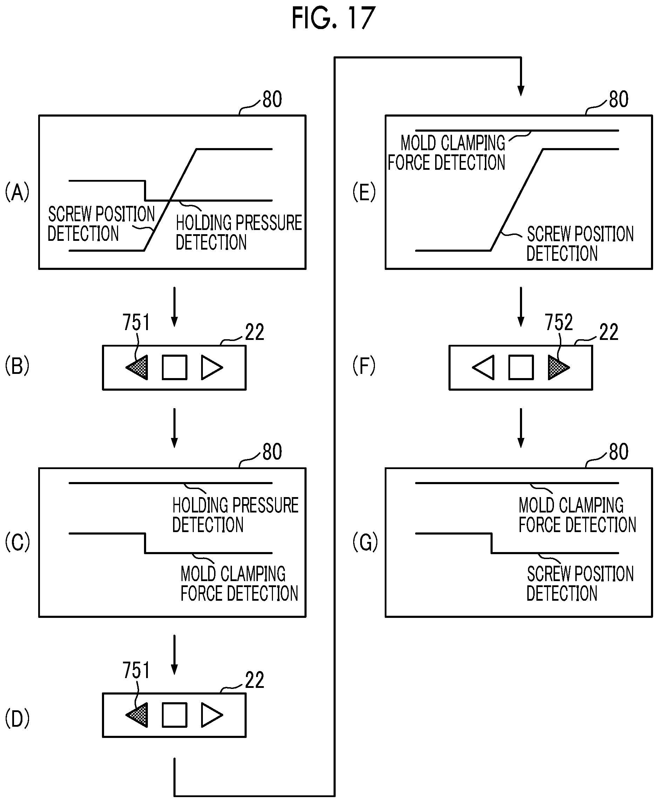

Next, an operation of switching the waveforms to be displayed on the waveform display screen 80 when the backward button 751 or the forward button 752 is pressed will be described with reference to Fig. 17.

Fig. 17 are diagrams for describing a scene in which waveforms to be displayed on the waveform display screen 80 are switched when the backward button 751 or the forward button 752 is pressed. The waveform display screen 80 in (A) of Fig. 17 displays a "holding pressure detection" waveform and a "screw positiondetection" waveform. (C) and (G) of Fig. 17 respectively display the "holding pressure detection" waveform and a "mold clamping force detection" waveform. (E) of Fig. 17 displays the "mold clamping force detection" waveform and the "screw position detection" waveform. (B) and (D) of Fig. 17 respectively show states where the backward button 751 is pressed. (F) of Fig. 17 shows a state where the forward button 752 is pressed.

In a case where the backward button 751 is pressed as shown in (B) of Fig. 17 when the waveform display screen 80 shown in (A) of Fig. 17 is displayed, the display contents of the waveform display screen 80 are switched to old waveforms in a time-series. Therefore, the display on the waveform display screen 80 is switched to the waveforms shown in (C) of Fig. 17.

In a case where the backward button 751 is pressed as shown in (D) of Fig. 17 when the waveform display screen 80 shown in (C) of Fig. 17 is being displayed, the display contents of the waveform display screen 80 are switched to old waveforms in a time-series. Therefore, the display on the waveform display screen 80 is switched to the waveforms shown in (E) of Fig. 17.

In a case where the forward button 752 is pressed as shown in (F) of Fig. 17 when the waveform display screen 80 shown in (E) of Fig. 17 is being displayed, the display contents of the waveform display screen 80 are switched to new waveforms in a time-series. Therefore, the display on the waveform display screen 80 is switched to the waveforms shown in (G) of Fig. 17.

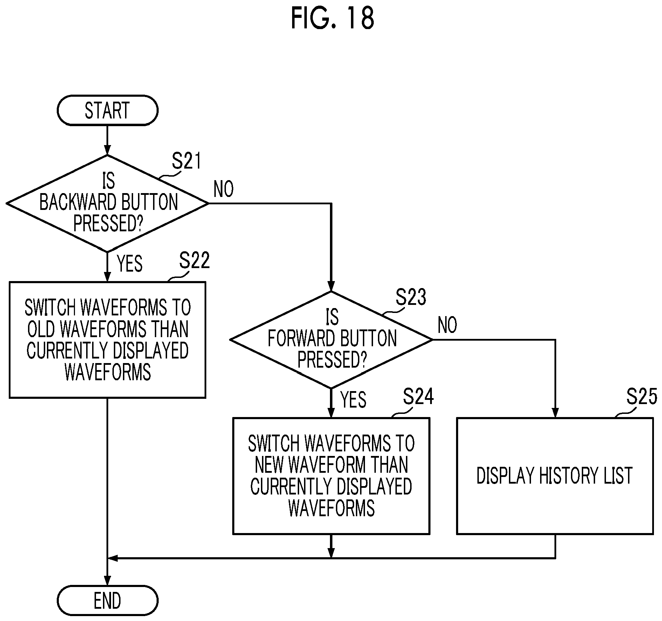

Fig. 18 is a flowchart of switching processing of the waveforms. The controller 700 determines whether or not the backward button 751 is pressed in step S21. In a case where the backward button 751 is pressed (Yes in step S21), the controller 700 switches the waveforms to old waveforms in a time-series than currently displayed waveforms (step S22). For example, in a case where the backward button 751 is pressed when the waveforms shown in (C) of Fig. 17 is displayed, the waveforms are switched to the waveforms shown in (E) of Fig. 17.

In step S21, in a case where a button other than the backward button 751 is pressed (No in step S21), the controller 700 determines that the forward button 752 or the history button 753 is pressed and executes processing of step S23.

In a case where the forward button 752 is pressed (Yes in step S23), the controller 700 switches the waveforms to new waveforms in a time-series than currently displayed waveforms (step S24). For example, in a case where the forward button 752 is pressed when the waveforms shown in (E) of Fig. 17 are displayed, the waveforms are switched to the waveforms shown in (G) of Fig. 17.

In a case where a button other than the forward button 752 is pressed (No in Step S23), the controller 700 determines that the history button 753 is pressed and displays the history display portion 223c (Step S25).

Every time the condition button (backward button 751 or forward button 752) to be displayed on the button display portion 22 is pressed, the condition button display processing section 727 may perform display control in which the setting conditions (waveforms) on the waveform display screen 80 are switched or may perform display control, for example, in which the setting conditions (waveforms) before the backward button 751 is pressed once and the setting conditions (waveforms) after the backward button 751 is pressed once are displayed on the waveform display screen 80 at the same time, as shown in Fig. 17.

As described above, with the controller 700 according to the present embodiment, when the type and number of waveforms for managing the operation of the injection molding machine 10 are changed using the waveform selection field 60, the vertical axis upper limit value input field 61, the vertical axis lower limit value input field 62, the waveform number selection field 63, the waveform color selection field. 64, and the like, and then the same waveforms set in the past are used again, the operator can display the same waveforms set in the past only by pressing the backward button 751 without operating the waveform selection field 60, the vertical axis upper limit value input field 61, the vertical axis lower limit value input field 62, the waveform number selection field 63, the waveform color selection field. 64, and the like. Therefore, with the controller 700 according to the present embodiment, it is possible to save time and effort to change the type and number of waveforms again using the waveform selection field 60, the vertical axis upper limit value input field 61, the vertical axis lower limit value input field 62, the waveform number selection field 63, the waveform color selection field 64, and the like, and thus to shorten the work time for changing the type and number of waveforms and suppress erroneous input.

The condition button display processing section of the controller 700 according to the present embodiment may be configured to display the backward button 751 for displaying the setting conditions set in the past in the backward direction in a time-series on a display screen. With this configuration, it is possible to switch the setting conditions to be currently set to the setting conditions set in the past only by pressing the backward button 751, to save time and effort to set the setting conditions again using the waveform selection field 60, the first screen 21a, the second screen 21b, the third screen 21c, and the like, and thus to shorten the work time for setting the setting conditions and suppress erroneous input.

The condition button display processing section of the controller 700 according to the present embodiment may be configured to display the forward button 752 for displaying the setting conditions set in the past in the forward direction in a time-series on the display screen. With this configuration, it is also possible to display the setting conditions set in the forward direction in a time-series from a position of setting conditions to be displayed after the backward button 751 is pressed only by pressing the forward button 752. Therefore, in a case where setting conditions are finely adjusted, it is possible to use the setting conditions without manually inputting again the setting conditions set in the forward direction in a time-series and thus to significantly shorten the time for the fine adjustment of the setting conditions.

A history button display processing section of the controller 700 according to the present embodiment may be configured to display a history button for displaying a history of the setting conditions set in the past on the display screen. With this configuration, it is possible to display a list of the history of setting conditions only by pressing the history button 753. Therefore, for example, it is possible to easily search for setting conditions desired by the operator from the history list and thus to shorten the time for the fine adjustment of the setting conditions.

The controller 700 according to the present embodiment may be configured to include a setting condition display portion which displays the history of the saved setting conditions on a display screen and displays the setting conditions in the displayed history when the condition button (the backward button 751 or the forward button 752) is pressed. With this configuration, it is possible to display the setting conditions desired by the operator from the history screen on the condition display portion 21 and thus to save time and effort to manually input the setting conditions again.

The controller 700 according to the present embodiment may be configured to include a history addition section which adds setting conditions of injection molding to the history when the injection molding is performed. With this configuration, the history does not include setting conditions which are only displayed without being reflected in the operation of the injection molding machine. Therefore, only the setting conditions used for the molding adjustment can be left as the history. Therefore, it is possible to easily search for only the setting conditions used for the molding adjustment as compared with a case where all the displayed setting conditions are added as the history.

The history addition section may have a history selection function (history selection unit) . The history selection unit is configured to be able to select, for example, whether to add setting conditions of injection molding when the injection molding is performed to the history or add setting conditions which are only displayed to the history without being reflected in the operation of the injection molding machine. For example, when a first history addition button and a second history addition button are displayed on a display screen of a display unit and the operator presses any of these buttons, the history addition section executes a history addition operation corresponding to a pressed button when the pressing of the first history addition button or the second history addition button is detected. The first history addition button is a button for adding setting conditions of injection molding when the injection molding is performed to the history. The second history addition button is a button for adding setting conditions which are only displayed to the history without being reflected in the operation of the injection molding machine. In this manner, with the history selection function (history selection unit), for example, it is possible for the operator to randomly select whether to leave only the setting conditions used for the molding adjustment as the history or add all the displayed setting conditions as the history. Therefore, it is possible to flexibly respond to the needs of the operator.

The history addition section may be configured to add the setting conditions of the injection molding to the history when the backward button 751 is pressed. With this configuration, the history does not include the setting conditions when the forward button 752 is pressed among the setting conditions reflected in the operation of the injection molding machine. Therefore, it is possible to leave the setting conditions in the case where the backward button 751 having a high usage frequency is pressed, as the history. Therefore, it is possible to easily search for only the setting conditions used for the molding adjustment as compared with the case where all the displayed setting conditions are added as the history.

The controller 700 according to the present embodiment may be configured to include a molding pass or fail result display portion which displays a pass or fail result of the injection molding in association with the setting conditions of the injection molding when the injection molding is performed. With this configuration, it is possible to easily discriminate only the setting conditions when a good product is obtained by the injection molding among the setting conditions reflected in the operation of the injection molding machine. Therefore, it is possible to easily obtain the good product at repeated injection molding by the operator using the setting conditions.

The history display processing section 723 of the controller 700 according to the present embodiment may be configured to display a history of setting conditions of the injection molding machine set in the past on a display screen on which the setting conditions are displayed. With this configuration, the switching between the screen on which the condition display portion 21 is displayed and the screen on which the history is displayed is unnecessary. Therefore, it is possible for the operator to finely adjust the setting conditions while checking the history to be displayed on the same screen as the screen on which the condition display portion 21 is displayed, and thus the work time for changing the setting conditions can be shortened.

In the history list, setting conditions to be displayed every time the backward button 751 or the forward button 752 is pressed may be added as history information, or, for example, only setting conditions reflected in the operation of the injection molding machine among the setting conditions to be displayed every time the backward button 751 or the forward button 752 is pressed may be added as the history information. In a case where the setting conditions to be displayed every time the backward button 751 or the forward button 752 is pressed is added as the history information, the latest setting conditions added become the newest setting conditions in a time-series. The setting conditions reflected in the operation of the injection molding machine among the setting conditions to be displayed each time the backward button 751 or the forward button 752 is pressed become the newest setting conditions in a time-series order.

The controller of the injection molding machine, the embodiment of the injection molding machine, and the like are described above. However, the present invention is not limited to the above embodiment and the like, and various modifications and improvements are possible within the scope of the present invention described in the claims.

### Brief Description of the Reference Symbols

- 10:: injection molding machine
- 20: display screen
- 21: condition display portion
- 21a:: first screen,
- 21b:: second screen
- 21c:: third screen
- 21d:: fourth screen
- 22:: button display portion
- 51:: input field
- 52a:: position switching button
- 52b:: pressure switching button
- 52c:: external input button
- 60:: waveform selection field
- 100:: mold clamping unit
- 220:: drive mechanism
- 300:: injection unit
- 400:: movement unit
- 700:: controller
- 727:: condition button display processing section
- 723:: history display processing section
- 750:: operation unit
- 751:: backward button
- 752:: forward button
- 753:: history button
- 754:: condition button
- 760:: display unit
- 800:: mold unit

## Claims

1. A controller (700) of an injection molding machine (10) comprising:
a condition button display processing section (727) configured to display a condition button (754) for displaying setting conditions of the injection molding machine (10) set in the past, on a display screen (20) on which the setting conditions are displayed,
**characterized in that**
the condition button display processing section (727) is configured to display a backward button (751) for displaying the setting conditions set in the past in a backward direction in a time-series, on the display screen (20).

2. The controller (700) of the injection molding machine (10) according to claim 1,
wherein the condition button display processing section (727) is configured to display a forward button (752) for displaying the setting conditions set in the past in a forward direction in a time-series, on the display screen (20).

3. The controller (700) of the injection molding machine (10) according to claim 1 or 2, further comprising:
a history button display processing section (728) configured to display a history button (753) for displaying a history of the setting conditions set in the past, on the display screen (20).

4. The controller (700) of the injection molding machine (10) according to any one of claims 1 to 3, further comprising:
a setting condition display portion configured to display a history of the saved setting conditions on the display screen (20) and display the setting conditions in the displayed history when the condition button (754) is pressed.

5. The controller (700) of the injection molding machine (10) according to any one of claims 1 to 4, further comprising:
a history addition section configured to add setting conditions of injection molding to a history when the injection molding is performed.

6. The controller (700) of the injection molding machine (10) according to claim 5,
wherein the history addition section is configured to add the setting conditions of the injection molding to a history when a backward button (751) for displaying the setting conditions set in the past in a backward direction in a time-series is pressed.

7. The controller (700) of the injection molding machine (10) according to any one of claims 1 to 6, further comprising:
a molding pass or fail result display portion configured to display a pass or fail result of injection molding in association with setting conditions of the injection molding when the injection molding is performed.

8. The controller (700) of the injection molding machine (10) according to any one of claims 1 to 7, further comprising:
a history display processing section (723) configured to display a history of setting conditions of the injection molding machine (10) set in the past, on a display screen on which the setting conditions are displayed.

9. An injection molding machine comprising:
the controller according to any one of claims 1 to 8.

## Patentansprüche

1. Steuerung (700) einer Spritzgießmaschine (10), umfassend:
einen Bedingungsschaltfläche-Anzeigebearbeitungsabschnitt (727), der konfiguriert ist, eine Bedingungsschaltfläche (754) zur Anzeige von Einstellungsbedingungen der Spritzgießmaschine (10), die in der Vergangenheit eingestellt wurden, auf einem Anzeigebildschirm (20), auf dem die Einstellungsbedingungen angezeigt werden, anzuzeigen,
**dadurch gekennzeichnet, dass**
der Bedingungsschaltfläche-Anzeigebearbeitungsabschnitt (727) konfiguriert ist, eine Rückwärts-Schaltfläche (751) zum Anzeigen der Einstellungsbedingungen, die in der Vergangenheit eingestellt wurden, in einer Rückwärtsrichtung in einer Zeitfolge auf dem Anzeigebildschirm (20) anzuzeigen.

2. Steuerung (700) der Spritzgießmaschine (10) nach Anspruch 1,
wobei der Bedingungsschaltfläche-Anzeigebearbeitungsabschnitt konfiguriert ist, eine Vorwärts-Schaltfläche (752) zum Anzeigen der Einstellungsbedingungen, die in der Vergangenheit eingestellt wurden, in einer Vorwärtsrichtung in einer Zeitfolge auf dem Anzeigebildschirm (20) anzuzeigen.

3. Steuerung (700) der Spritzgießmaschine (10) nach Anspruch 1 oder 2, ferner umfassend:
einen Verlaufsschaltfläche-Anzeigebearbeitungsabschnitt (728), der konfiguriert ist, eine Verlaufsschaltfläche (753) zum Anzeigen eines Verlaufs der Einstellungsbedingungen, die in der Vergangenheit eingestellt wurden, auf dem Anzeigebildschirm (20) anzuzeigen.

4. Steuerung (700) der Spritzgießmaschine (10) nach einem der Ansprüche 1 bis 3, ferner umfassend:
einen Einstellungsbedingungs-Anzeigeabschnitt, der konfiguriert ist, einen Verlauf der gespeicherten Einstellungsbedingungen auf dem Anzeigebildschirm (20) anzuzeigen und die Einstellungsbedingungen in dem angezeigten Verlauf anzuzeigen, wenn die Bedingungsschaltfläche (754) gedrückt wird.

5. Steuerung (700) der Spritzgießmaschine (10) nach einem der Ansprüche 1 bis 4, ferner umfassend:
einen Verlaufshinzufügungsabschnitt, der konfiguriert ist, Einstellungsbedingungen des Spritzgießens einem Verlauf hinzuzufügen, wenn das Spritzgießen durchgeführt wird.

6. Steuerung (700) der Spritzgießmaschine (10) nach Anspruch 5,
wobei der Verlaufshinzufügungsabschnitt konifguriert ist, die Einstellungsbedingungen des Spritzgießens einem Verlauf hinzuzufügen, wenn eine Rückwärts-Schaltfläche (751) zur Anzeige der Einstellungsbedingungen, die in der Vergangenheit eingestellt wurden, in einer Rückwärtsrichtung in einer Zeitfolge gedrückt wird.

7. Steuerung (700) der Spritzgießmaschine (10) nach einem der Ansprüche 1 bis 6, ferner umfassend:
einen Abschnitt zur Anzeige eines erfolgreichen oder fehlgeschlagenen Formergebnisses, der konfiguriert ist, ein erfolgreiches oder fehlgeschlagenes Ergebnis des Spritzgießenes in Zusammenhang mit Einstellungsbedingungen des Spritzgießens anzuzeigen, wenn das Spritzgießen durchgeführt wird.

8. Steuerung (700) der Spritzgießmaschine (10) nach einem der Ansprüche 1 bis 7, ferner umfassend:
einen Verlaufsanzeigebearbeitungsabschnitt (723), der konfiguriert ist, einen Verlauf von Einstellungsbedingungen der Spritzgießmaschine (10), die in der Vergangenheit eingestellt wurden, auf einem Anzeigebildschirm anzuzeigen, auf dem die Einstellungsbedingungen angezeigt werden.

9. Spritzgießmaschine, umfassend:
die Steuerung nach einem der Ansprüche 1 bis 8.

## Revendications

1. Un organe de commande (700) d'une machine de moulage par injection (10) comprenant :
une section de traitement d'affichage de bouton de conditions (727) configurée de manière à afficher un bouton de conditions (754) pour afficher des conditions de réglage de la machine de moulage par injection (10), définies dans le passé, sur un écran d'affichage (20) sur lequel les conditions de réglage sont affichées, **caractérisé en ce que** :
la section de traitement d'affichage de bouton de conditions (727) est configurée de manière à afficher un bouton de retour (751) pour afficher les conditions de réglage définies dans le passé dans une direction vers l'arrière dans une série temporelle, sur l'écran d'affichage (20).

2. L'organe de commande (700) de la machine de moulage par injection (10) selon la revendication 1,
dans lequel la section de traitement d'affichage de bouton de conditions (727) est configurée de manière à afficher un bouton d'avance (752) pour afficher les conditions de réglage définies dans le passé dans une direction vers l'avant dans une série temporelle, sur l'écran d'affichage (20).

3. L'organe de commande (700) de la machine de moulage par injection (10) selon la revendication 1 ou 2, comprenant en outre :
une section de traitement d'affichage de bouton d'historique (728) configurée de manière à afficher un bouton d'historique (753) pour afficher un historique des conditions de réglage définies dans le passé, sur l'écran d'affichage (20).

4. L'organe de commande (700) de la machine de moulage par injection (10) selon l'une quelconque des revendications 1 à 3, comprenant en outre :
une partie d'affichage de conditions de réglage configurée de manière à afficher un historique des conditions de réglage enregistrées, sur l'écran d'affichage (20), et à afficher les conditions de réglage dans l'historique affiché, lorsque le bouton de conditions (754) est enfoncé.

5. L'organe de commande (700) de la machine de moulage par injection (10) selon l'une quelconque des revendications 1 à 4, comprenant en outre :
une section d'ajout d'historique configurée de manière à ajouter des conditions de réglage de moulage par injection, à un historique, lorsque le moulage par injection est mis en œuvre.

6. L'organe de commande (700) de la machine de moulage par injection (10) selon la revendication 5,
dans lequel la section d'ajout d'historique est configurée de manière à ajouter les conditions de réglage du moulage par injection, à un historique, lorsqu'un bouton de retour (751), pour afficher les conditions de réglage définies dans le passé dans une direction vers l'arrière dans une série temporelle, est enfoncé.

7. L'organe de commande (700) de la machine de moulage par injection (10) selon l'une quelconque des revendications 1 à 6, comprenant en outre :
une partie d'affichage de résultat de réussite ou d'échec de moulage, configurée de manière à afficher un résultat de réussite ou d'échec de moulage par injection, en association avec des conditions de réglage du moulage par injection, lorsque le moulage par injection est mis en œuvre.

8. L'organe de commande (700) de la machine de moulage par injection (10) selon l'une quelconque des revendications 1 à 7, comprenant en outre :
une section de traitement d'affichage d'historique (723) configurée de manière à afficher un historique de conditions de réglage de la machine de moulage par injection (10), définies dans le passé, sur un écran d'affichage sur lequel les conditions de réglage sont affichées.

9. Une machine de moulage par injection comprenant :
l'organe de commande selon l'une quelconque des revendications 1 à 8.
